(19) Europäisches Patentamt / European Patent Office / Office européen des brevets

(11) **EP 4 485 264 B1**

(12) **EUROPEAN PATENT SPECIFICATION**

(45) Date of publication and mention of the grant of the patent:
**22.04.2026 Bulletin 2026/17**

(21) Application number: **23811407.8**

(22) Date of filing: **14.03.2023**

(51) International Patent Classification (IPC):
**G06F 30/20** (2020.01)   **B62D 21/00** (2006.01)
**G01M 7/02** (2006.01)   **G01M 17/007** (2006.01)
**G06F 30/15** (2020.01)   **G01M 5/00** (2006.01)
**G01M 7/00** (2006.01)   **G06F 30/17** (2020.01)
**G06F 30/23** (2020.01)   **G01M 99/00** (2011.01)
**G06F 111/04** (2020.01)   **G06F 111/06** (2020.01)
**G06F 119/04** (2020.01)   **G06F 119/14** (2020.01)

(52) Cooperative Patent Classification (CPC):
**G06F 30/15; B62D 21/11; G01M 5/0066;
G01M 7/00; G01M 17/007; G01M 99/007;
G06F 30/17; G06F 30/20; G06F 30/23;**
G06F 2111/04; G06F 2111/06; G06F 2119/04;
G06F 2119/14

(86) International application number:
**PCT/JP2023/009888**

(87) International publication number:
**WO 2023/228526 (30.11.2023 Gazette 2023/48)**

(54) **METHOD, DEVICE, AND PROGRAM FOR OPTIMIZING AND ANALYZING JOINING POSITION OF AUTOMOTIVE BODY, AND METHOD FOR MANUFACTURING AUTOMOTIVE BODY**

VERFAHREN, VORRICHTUNG UND PROGRAMM ZUR OPTIMIERUNG UND ANALYSE DER VERBINDUNGSPOSITION EINER KRAFTFAHRZEUGKAROSSERIE UND VERFAHREN ZUR HERSTELLUNG EINER KRAFTFAHRZEUGKAROSSERIE

PROCÉDÉ, DISPOSITIF ET PROGRAMME D'OPTIMISATION ET D'ANALYSE DE POSITION DE JONCTION DE CARROSSERIE AUTOMOBILE, ET PROCÉDÉ DE FABRICATION DE CARROSSERIE AUTOMOBILE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.05.2022 JP 2022085107**

(43) Date of publication of application:
**01.01.2025 Bulletin 2025/01**

(73) Proprietor: **JFE Steel Corporation
Tokyo 100-0011 (JP)**

(72) Inventor: **TOKITA, Yuichi
Tokyo 100-0011 (JP)**

(74) Representative: **Grünecker Patent- und
Rechtsanwälte
PartG mbB
Leopoldstraße 4
80802 München (DE)**

(56) References cited:
**WO-A1-2018/008233     WO-A1-2018/066283
WO-A1-2021/225037     WO-A1-2021/240964**

- AN CUI ET AL: "The layout and fatigue life analysis of welding spots for the cab body in white of a commercial vehicle", ELECTRONIC AND MECHANICAL ENGINEERING AND INFORMATION TECHNOLOGY (EMEIT), 2011 INTERNATIONAL CONFERENCE ON, IEEE, 12 August 2011 (2011-08-12), pages 2089 - 2093, XP032459077, ISBN: 978-1-61284-087-1, DOI: 10.1109/EMEIT.2011.6023512

- AHMET H ERTAS ET AL: "Design optimization of spot-welded plates for maximum fatigue life", FINITE ELEMENTS IN ANALYSIS AND DESIGN, ELSEVIER, AMSTERDAM, NL, vol. 47, no. 4, 17 November 2010 (2010-11-17), pages 413 - 423, XP028140325, ISSN: 0168-874X, [retrieved on 20101216], DOI: 10.1016/J.FINEL.2010.11.003

**Description**

Field

The present invention relates to a method for manufacturing an automotive body by using a method for optimizing and analyzing a joining position of an automotive body, in which the optimal position of a weld line for improving the stiffness of the automotive body and a fatigue life near the weld line for bonding and joining a parts assembly in the automotive body are determined. Background

In recent years, weight reduction of an automotive body triggered by environmental problems has been promoted particularly in the automobile industry. Analysis through computer aided engineering (hereinafter, referred to as "CAE analysis") has been an essential technique for designing an automotive body. It is known that, in the CAE analysis, improvement of stiffness and weight reduction are achieved by using optimization techniques such as mathematical optimization, sheet thickness optimization, shape optimization, and topology optimization.

A structural body such as an automotive body is formed by bonding and joining a plurality of parts by welding and the like as a parts assembly. It is known that an increase in a joining amount at a portion bonded and joined as the parts assembly (e.g., increase in number of continuous weld lines by electric arc welding and laser welding) improves stiffness of the entire automotive body. The improved stiffness inhibits stress generated in the entire part, and tends to improve a fatigue life of the part. In contrast, unfortunately, an increase in local stress may decrease the fatigue life. Moreover, the joining amount is desired to be minimized from the viewpoint of costs of manufacturing the automotive body. Furthermore, the optimal arrangement of welding positions for simultaneously improving fatigue performance for a plurality of input conditions is required.

Therefore, methods for determining a joining position for bonding and joining positions (continuously joined welding position of laser, arc, and like) are proposed for improving the stiffness and the fatigue life of an automotive body while inhibiting the costs of manufacturing the automotive body. The methods include a method for determining a joining position from experience, intuition, and the like and a method for increasing the number of joining positions at a portion determined to have large stress by stress analysis. Furthermore, in a case of addressing a plurality of performances, determination may be made by trial and error in which welding positions arranged for satisfying one performance are confirmed by performing evaluation for another performance.

In the method for determining a joining position by experience, intuition, and the like, however, a position of a weld line necessary for improving both stiffness and a fatigue life is not determined. Thus, a position unnecessary for improving stiffness and a fatigue life may be set as a weld line, and trial and error are repeated, which is inefficient in terms of costs.

Furthermore, in the method for increasing the number of joining positions at a portion determined to have large stress by stress analysis, stiffness and a fatigue life are changed as compared to those before the joining positions are determined by the method, whereas local stress is often increased by inhibition in deformation of the portion. Thus, the joining positions determined by the method are not necessarily optimal. After all, the method is in trial-and-error design, and inefficient.

In contrast, Patent Literature 1 discloses a method and a device for optimizing and analyzing a joining position in point joining and continuous joining used for bonding and joining a plurality of parts constituting a structural body model including a two-dimensional element and/or a three-dimensional element. The point joining includes spot welding. The continuous joining includes laser welding, electric arc welding, and weldbond joining. Furthermore, Patent Literature 2 discloses a device and a method for identifying a continuous joining application portion of a structural body model. In the device and the method, a portion suitable for continuous joining is easily identified without requiring a complicated operation in the structural body model including a two-dimensional element and/or a three-dimensional element constituting a part.

Non-Patent Literature 1 discloses a method for optimizing the layout of welding spots on a vehicle body. It employs a "multi-area synthetic optimization" approach where the body is divided into different areas. However, the optimization is limited exclusively to the layout of the welding spots, while the geometry of the parts being joined is considered fixed. A fatigue life analysis is performed, but only as a subsequent verification of the result, rather than as an active parameter within the optimization process itself.

Citation List

Patent Literature and Non-Patent Literature

Patent Literature 1: JP 2013-025593 A
Patent Literature 2: JP 2016-71770 A

**EP 4 485 264 B1**

Non-Patent Literature 1: AN CUI ET AL: "The layout and fatigue life analysis of welding spots for the cab body in white of a commercial vehicle", ELECTRONIC AND MECHANICAL ENGINEERING AND INFORMATION TECHNOLOGY (EMEIT), 2011 INTERNATIONAL CONFERENCE ON, IEEE, 12 August 2011 (2011-08-12), pages 2089-2093, XP032459077, DOI: 10.1109/EMEIT.2011.6023512 ISBN: 978-1-61284-087-1.

Summary

Technical Problem

During traveling of an automobile, a variable amplitude load is input to an automotive body. The amplitude, direction, and the like of the variable amplitude load are not temporally constant, and complicatedly vary. Therefore, there has been demanded a technique for determining the optimal length and arrangement of a weld line capable of improving the stiffness of an automotive body and a fatigue life near a continuous weld line in a case where a complicated variable amplitude load is input to the automotive body. Chassis components or suspension parts of an automobile often include a structural body for bonding and joining parts by electric arc welding. It is, however, known that fatigue strength around an electric arc welding portion is not improved due to an influence of the notch geometry of an electric arc weld toe even when the base metal strengths of the parts are improved. Therefore, in the future, optimization of electric arc welding joining arrangement will be important while expansion of application of high-tensile steel sheets to the chassis components or suspension parts is expected. In contrast, in a case of a short welding margin capable of welding parts, the fatigue life may be not sufficiently improved even when the electric arc welding joining arrangement is optimized. The shapes of the parts themselves may need to be reviewed in order to secure the welding margin. Furthermore, since fatigue performance in electric arc welding is greatly influenced by a part shape, a technique for simultaneously optimizing both welding arrangement and the part shape has been required.

In the techniques disclosed in Patent Literatures 1 and 2, however, a volume ratio of material, maximization of stiffness, minimization of displacement, minimization of stress, and the like are set as analysis conditions for performing optimization calculation, and the optimal position in point joining or continuous joining is determined. Improvement of a fatigue life in the point joining and the continuous joining is not considered at all. Furthermore, in the technique disclosed in Patent Literature 2, an automotive body bonded and joined mainly by spot welding is set as a target. A spot joining element having a spot joining interval of a predetermined value or less is identified as a portion suitable for continuous joining. A problem is that the technique cannot be applied to the chassis components or suspension parts of an automobile for continuously joining the parts by electric arc welding and the like.

The present invention has been made in view of the above-described programs, and an object thereof is to provide a a method for manufacturing the automotive body by using a method for optimizing and analyzing a joining position of an automotive body. The method simultaneously achieves the optimal arrangement of a weld line for minimizing the length of the weld line and optimization of a part shape while improving the stiffness of an automotive body and a fatigue life of a continuous weld line for bonding and joining a parts assembly in the automotive body in a case where a simple or variable load is input to the automotive body.

Solution to Problem

A method according to the present invention for manufacturing an automotive body is as specified in claim 1. A preferred embodiment thereof is specified in dependent claim 2.

Advantageous Effects of Invention

According to the present invention, in a case where a variable amplitude load that is not temporally constant is input to an automotive body during traveling of an actual automobile, the optimal position and optimal part shape of a weld line capable of achieving one of minimization of the length of a candidate for weld line, improvement of the stiffness of an analysis object model, and improvement of a fatigue life near a weld line for bonding and joining a parts assembly can be simultaneously determined, and a fatigue life equal to or longer than that in a case where the weld line is optimally arranged can be achieved. This enables the optimal arrangement of a continuous weld line, improvement of a fatigue life of the continuous weld line, and optimization of a part shape in an automotive body structure.

Brief Description of Drawings

FIG. 1 is a block diagram of a device for optimizing and analyzing a joining position of an automotive body according to a first embodiment of the present invention.

FIG. 2 illustrates a rear subframe model set as an analysis object model in the first embodiment of the present invention.

FIG. 3 illustrates an initial weld line preset in the rear subframe model in one example of the analysis object model in the first embodiment of the present invention.

FIG. 4 illustrates one example of an electric arc welding portion obtained by modeling the initial weld line in calculation of a fatigue life of the initial weld line in the first embodiment of the present invention.

FIG. 5 illustrates examples of a loading condition and a constraint condition in a first vibration pattern and a second vibration pattern to be given to the rear subframe model set as the analysis object model in the first embodiment of the present invention.

FIG. 6 illustrates one example of an analysis object model in which an initial weld line preset in the analysis object model and an additional weld line added to the analysis object model are set as candidates for weld line in the first embodiment of the present invention ((a) entire analysis object model and (b) partially enlarged view of optimization analysis model).

FIG. 7 illustrates one example of a variable loading condition set in the first embodiment of the present invention.

FIG. 8 is a stress endurance (S-N) diagram used for calculating a fatigue life under the variable loading condition in the first embodiment.

FIG. 9 illustrates one example of a result of a fatigue life of an initial weld line under the variable loading condition and positions of initial weld lines having the three shortest fatigue lives (minimum fatigue lives) in the first embodiment of the present invention. FIG. 9(b) illustrates the rear subframe model when viewed from below.

FIG. 10 illustrates a result of sensitivity analysis related to stiffness performance with a weld line of the rear subframe model being set as a target in the first embodiment of the present invention.

FIG. 11 is an explanatory diagram of a weld line/part shape optimization analysis model in the first embodiment and an example of the present invention ((a) optimization candidate weld line and (b) part to be optimized).

FIG. 12 illustrates another aspect of a method for setting design space of a part to be optimized in the weld line/part shape optimization analysis model.

FIG. 13 illustrates one example of mesh density distribution of weld lines and part shapes after optimization analysis of the weld line/part shape optimization analysis model in the first embodiment of the present invention. FIG. 13(b) is a partially enlarged view, in which only a portion having a large mesh density of the part shape after the optimization analysis is displayed.

FIG. 14 illustrates one example of optimization of a part shape based on a result of the optimization analysis in FIG. 13.

FIG. 15 is a flowchart illustrating a flow of processing in a method for optimizing and analyzing a joining position of an automotive body according to the first embodiment of the present invention.

FIG. 16 is an explanatory diagram of a stiffness evaluation point in the rear subframe model, which is a part of an automotive body model to be analyzed in an example.

FIG. 17 illustrates the optimal arrangement of a weld line determined by optimization analysis in a comparative example in which the rear subframe model is set as a target to be analyzed and an optimization analysis condition related to stiffness and a joining length is set in the example.

Description of Embodiments

Prior to describing a method, a device, and a program for optimizing and analyzing a joining position of an automotive body according to a first embodiment of the present invention and a method for manufacturing the automotive body according to a second embodiment, an automotive body model set as a target in the present invention will be described. In the specification and the drawings of the present application, an automotive body front-rear direction, an automotive body right-left direction, and an automotive body up-down direction are represented as an X direction, a Y direction, and a Z direction, respectively. In the specification and the drawings, elements having substantially the same functions and configurations are denoted by the same reference signs, and redundant description thereof is omitted.

<Automotive Body Model and Analysis Object Model>

An automotive body model set as a target in the present invention includes a plurality of part models such as a body's frame part and a chassis component. These part models are modeled by using a beam element, a two-dimensional element, and/or a three-dimensional element.

In general, the body's frame part, the chassis component, and the like are mainly formed of a metal sheet having a small sheet thickness, so that the part model constituting the automotive body model may include only the two-dimensional element.

Moreover, the automotive body model includes an initial weld line for bonding and joining a plurality of part models as a parts assembly. The initial weld line is obtained by modeling a weld line in electric arc welding and laser welding for bonding and joining a plurality of automotive parts as a parts assembly by using a two-dimensional element and a three-dimensional element.

For example, when two part models including two-dimensional elements are bonded and joined by the initial weld line modeled by a two-dimensional element, the two-dimensional element of the initial weld line is coupled to both the two-dimensional elements of the two part models.

Furthermore, when the initial weld line is modeled by a three-dimensional element, the two-dimensional elements of the part models and the three-dimensional element of the initial weld line are coupled by a rigid body element in order to distribute translational force acting on the initial weld line to the part models.

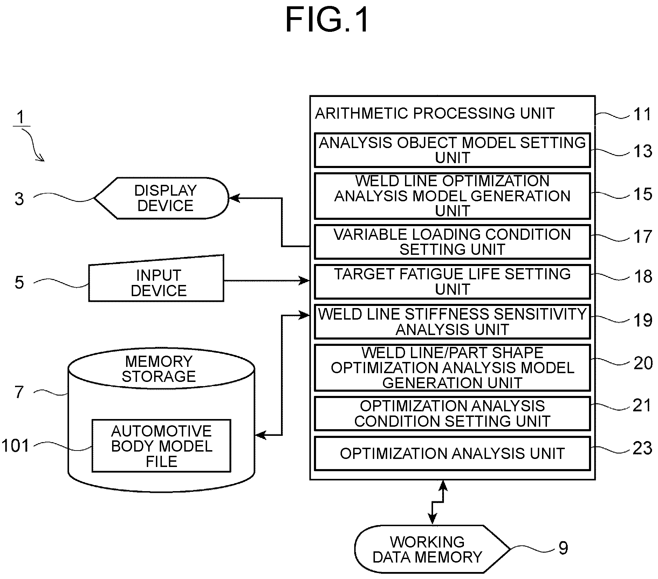

The present invention analyzes deformation caused by a variable amplitude load acting on an analysis object model (to be described later), which is the whole or a part of an automotive body model. Each part model in the automotive body model is modeled as an elastic body, a viscoelastic body, or an elastic-plastic body. Then, an automotive body model file 101 (see FIG. 1) stores material properties and element information of each part model constituting the automotive body model and information on an initial weld line and the like of each parts assembly.

[First Embodiment]

<Device for Optimizing and Analyzing Joining Position of Automotive Body>

A configuration of a device for optimizing and analyzing a joining position of an automotive body (hereinafter, simply referred to as "optimization analysis device") according to the first embodiment of the present invention will be described below.

The optimization analysis device sets all or a part of an automotive body model as an analysis object model. The optimization analysis device performs optimization analysis for determining optimal arrangement of a weld line for achieving one of improvement of stiffness of the automotive body model, improvement of a fatigue life of a weld line for bonding and joining a parts assembly in the automotive body model, and minimization of the length of the weld line for the analysis object model.

FIG. 1 illustrates one example of a configuration of an optimization analysis device 1 according to the first embodiment. The optimization analysis device 1 includes a personal computer (PC). As illustrated in FIG. 1, the optimization analysis device 1 includes a display device 3, an input device 5, a memory storage 7, a working data memory 9, and an arithmetic processing unit 11. The display device 3, the input device 5, the memory storage 7, and the working data memory 9 are connected to the arithmetic processing unit 11. The functions thereof are executed in accordance with commands from the arithmetic processing unit 11. The function of each component of the optimization analysis device 1 according to the first embodiment will be described below.

<<Display Device>>

The display device 3 is used for displaying an automotive body model, an analysis object model, an analysis result, and the like, and includes an LCD monitor.

<<Input Device>>

The input device 5 is used for an operator to input an instruction regarding readout of the automotive body model file 101 (FIG. 1), display of an automotive body model and an analysis object model, and the like, and includes a keyboard and a mouse.

<<Memory Storage>>

The memory storage 7 is used for, for example, storing various files such as the automotive body model file 101 (FIG. 1) and analysis results, and includes a hard disk.

<<Working Data Memory>>

The working data memory 9 is used for temporarily storing data to be used by the arithmetic processing unit 11 and performing an arithmetic operation, and includes a random access memory (RAM).

<<Arithmetic Processing Unit>>

As illustrated in FIG. 1, the arithmetic processing unit 11 includes an analysis object model setting unit 13, a weld line optimization analysis model generation unit 15, a variable loading condition setting unit 17, a target fatigue life setting unit 18, a weld line stiffness sensitivity analysis unit 19, a weld line/part shape optimization analysis model generation unit 20, an optimization analysis condition setting unit 21, and an optimization analysis unit 23. The arithmetic processing unit 11 includes a central processing unit (CPU) of a PC or the like. These units function when the CPU executes a predetermined program. The function of each unit of the arithmetic processing unit 11 will be described below.

(Analysis Object Model Setting Unit)

The analysis object model setting unit 13 acquires an automotive body model from the automotive body model file 101, and sets the whole or a part of the acquired automotive body model as an analysis object model.

One example of processing performed by the analysis object model setting unit 13 will be described below. First, the automotive body model is read out from the memory storage 7 by the operator giving an instruction of readout of the automotive body model from the automotive body model file 101 through the input device 5. Next, the automotive body model is displayed on the display device 3 in response to the instruction from the operator. Then, a portion to be subjected to optimization analysis in the automotive body model displayed on the display device 3 is designated in accordance with the instruction from the operator. The analysis object model setting unit 13 sets the designated portion as an analysis object model.

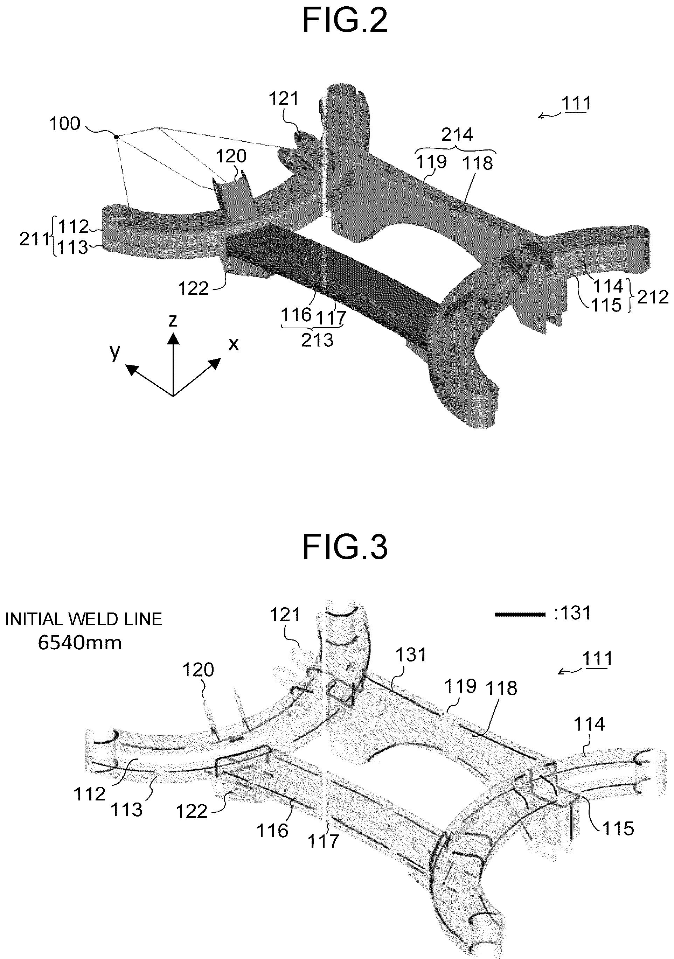

FIG. 2 illustrates an example in which a rear subframe model 111 is set as a target as an analysis object model. The rear subframe model 111 is obtained by simplifying a rear suspension subframe (hereinafter, rear subframe), which is a chassis component.

In the rear subframe model 111 in FIG. 2, a subframe upper 112 and a subframe lower 113 on the right side are bonded and joined by electric arc welding to form a side frame R211 serving as a part model. Similarly, a subframe upper 114 and a subframe lower 115 on the left side are bonded and joined by electric arc welding to form a side frame L212. A cross member upper 116 and a cross member lower 117 on the front side of the automotive body are bonded and joined by electric arc welding to form a cross member front 213. A cross member front 118 and a cross member rear 119 on the rear side of the automotive body are bonded and joined by electric arc welding to form a rear cross member 214. The side frame R211, the side frame L212, the cross member front 213, and the rear cross member 214 are further bonded and joined by electric arc welding to form a parallel cross structure. Then, brackets 120, 121, and 122 are bonded and joined by electric arc welding. The brackets 120, 121, and 122 are parts for attaching a part for supporting a suspension and a link mechanism to a tire to the parallel cross structure. (Although FIG. 2 illustrates only the right side, similar brackets are attached also on the left side.) Each of these part models is modeled by a two-dimensional element. In FIG. 2, a part connecting a tire input point 100 with the brackets 120, 121, and 122 and the rear cross member 214 is simplified and illustrated by straight lines indicating bar elements.

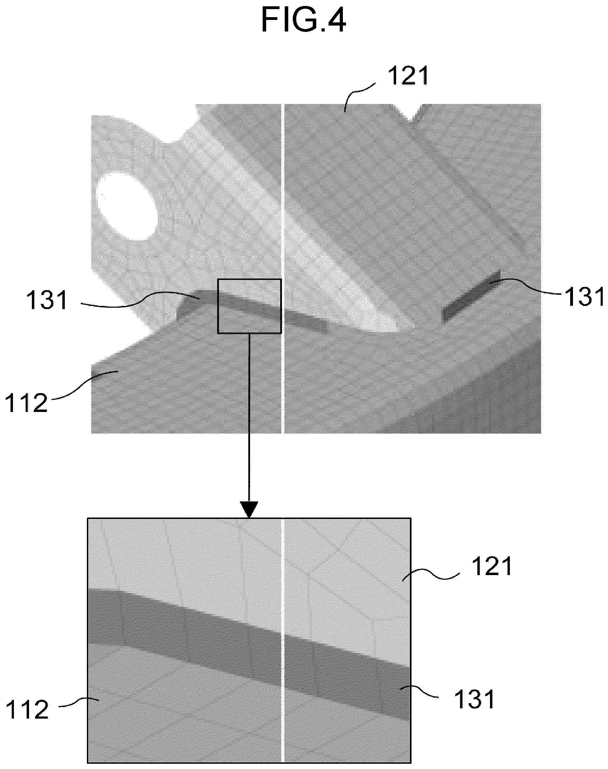

Then, as illustrated in FIG. 3, in the rear subframe model 111, an initial weld line 131 for bonding and joining part models as a parts assembly is preset. The length of the initial weld line is 6540 mm. Furthermore, as illustrated in FIG. 4, the initial weld line 131 is modeled by a two-dimensional element coupled to a two-dimensional element of a part model by node sharing. The initial weld line 131 has a smaller sheet thickness of sheet thicknesses of part models to be bonded and joined. Moreover, a material property value of the initial weld line 131 is similar to those of the part models.

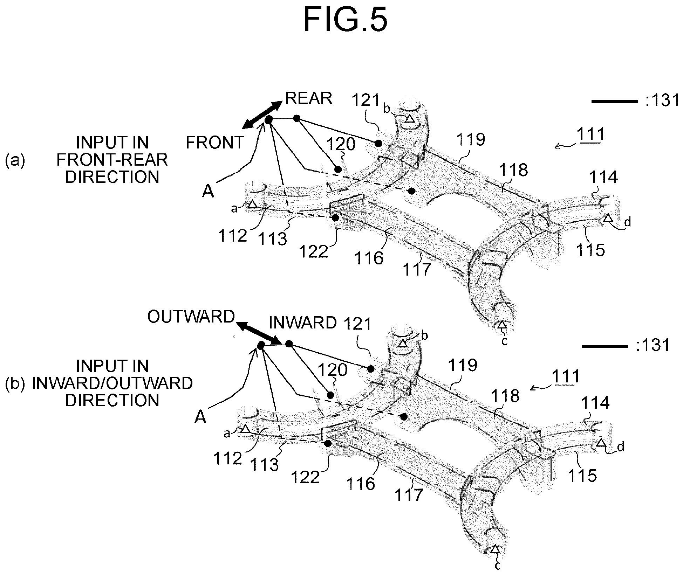

Furthermore, in order for the variable loading condition setting unit 17 to be described later to set a variable loading condition and a constraint condition to be given to the rear subframe model 111, the brackets 120, 121, and 122 and the rear cross member 214 are coupled to the tire input point 100 (see FIG. 2) by the bar elements as illustrated in FIG. 5. The tire input point 100 is defined as a load input point A. Four points of mount bushings a, b, c, and d in the figure are defined as complete restraint points.

(Weld Line Optimization Analysis Model Generation Unit)

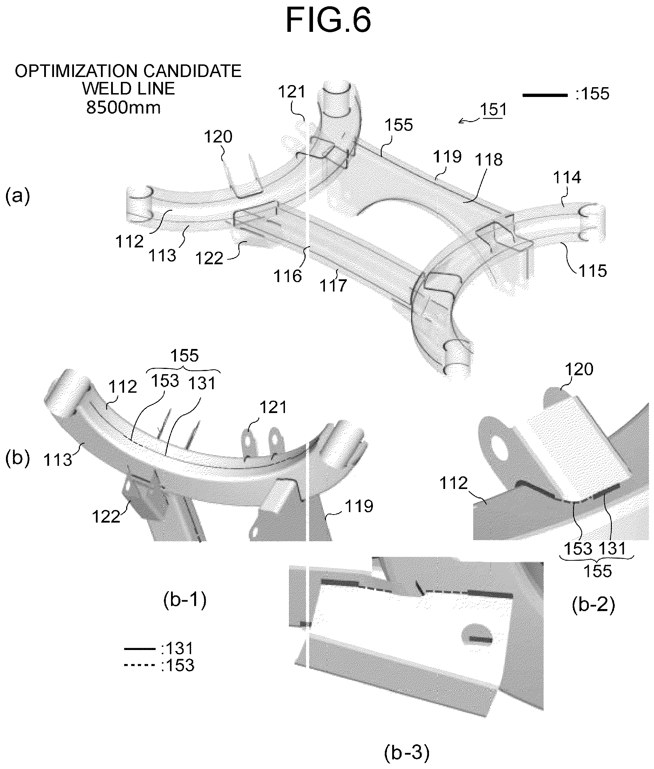

As illustrated in FIG. 6, the weld line optimization analysis model generation unit 15 generates a weld line optimization analysis model 151 in which all candidates for weld line, which are candidates for weld lines in optimal arrangement for an analysis object model, that is, the maximum number of settable candidates for weld line.

FIG. 6 illustrates the weld line optimization analysis model 151 generated by setting a candidate 155 for weld line in the rear subframe model 111. FIG. 6(b) illustrates a part of the weld line optimization analysis model 151 in an enlarged manner. Solid lines indicate initial weld lines 131. Broken lines indicate additional weld lines 153. Then, FIG. 6(a) illustrates these initial weld lines 131 and additional weld lines 153 as candidates 155 for weld line. The additional weld lines 153 may be added to fill gaps between the intermittently set initial weld lines 131 (b-1 and b-2). The additional weld lines 153 may be set by extending ends of the initial weld lines 131 (b-3). The additional weld lines 153 may be set by changing part shapes in a case where there is no space for setting the additional weld lines 153. As in the case of the above-described initial weld line 131, an additional weld line 153 may be modeled by a two-dimensional element, or may be modeled by a three-dimensional element.

(Variable Loading Condition Setting Unit)

The variable loading condition setting unit 17 sets a variable loading condition in which a variable amplitude load to be given to the optimization analysis model is divided into loading conditions of a plurality of different vibration patterns and a predetermined cycle number of loading conditions of the vibration patterns are combined to form one sequence.

The variable amplitude load is divided into vibration patterns different in one or a plurality of the magnitude, position, and direction of the load input to the analysis object model, and a predetermined cycle number of vibration patterns are combined. The variable amplitude load simulates a temporally varying variable amplitude load input to an automotive body at the time when an actual automobile travels. Then, the variable loading condition is given in calculating fatigue lives to be described later of the initial weld line 131 and the candidates 155 for weld line.

The variable loading condition setting unit 17 may set a variable loading condition and a constraint condition. The variable loading condition is obtained by dividing a variable amplitude load into loads of a plurality of different vibration patterns and combining these loads. The constraint condition constrains an analysis object model for each variable loading condition.

In the first embodiment, the mount bushings a to d attached to an automotive body are completely restrained, and the tire input point 100 on the right side of the automotive body is set as the load input point A in the rear subframe model 111. The variable loading condition includes a loading condition of a first vibration pattern in which a variable amplitude load of $\pm 2.5$ kN is input in a front-rear direction (input 1) as illustrated in FIG. 5(a) and a condition of a second vibration pattern in which a variable amplitude load of $\pm 6.0$ kN is input in an inward/outward direction (input 2) as illustrated in FIG. 5(b).

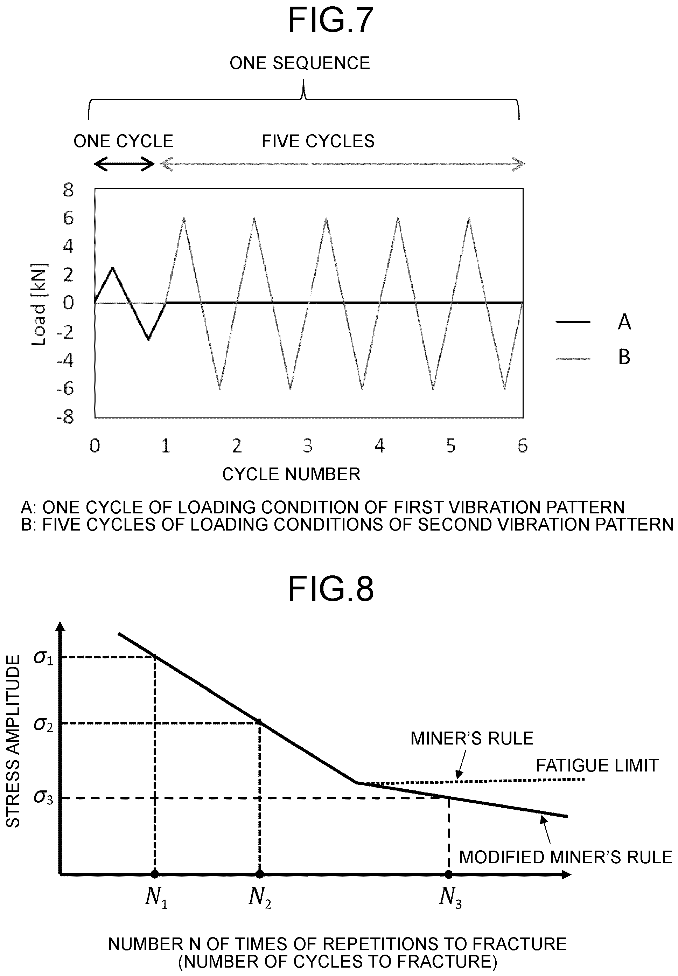

Then, as in a schematic diagram of a variable amplitude load history of FIG. 7, the variable loading condition of one sequence is obtained by combining one cycle of a loading condition of the first vibration pattern with five cycles of loading conditions of the second vibration pattern. Then, a fatigue life under a loaded variable condition will be considered. FIG. 7 is a graph schematically illustrating a reversed variable amplitude load having a magnitude of a load as an amplitude under the loading condition of the first vibration pattern and the loading conditions of the second vibration pattern in order to indicate cycle numbers of the loading condition of the first vibration pattern and the loading conditions of the second vibration pattern under the variable loading condition of one sequence.

(Target Fatigue Life Setting Unit)

The target fatigue life setting unit 18 performs stress analysis by giving a loading variable condition to the analysis object model (rear subframe model 111) or the weld line optimization analysis model 151 in which the initial weld line 131 is set. The target fatigue life setting unit 18 calculates a fatigue life of a weld line of the analysis object model or the weld line optimization analysis model 151. The target fatigue life setting unit 18 sets a target fatigue life by the number of times of sequences of the variable loading condition based on the calculation result.

A target fatigue life of the weld line optimization analysis model 151 is set by separately performing stress analysis by giving a loading condition of a vibration pattern in the variable loading condition set by the variable loading condition setting unit 17 to the analysis object model, calculating a fatigue life by using commercially available fatigue life predicting software, and referring to the shortest fatigue life. Furthermore, the predetermined number of times of sequences may be set as a target fatigue life from a conventional empirical rule.

In general, a load input to an actual automotive body is not temporally constant. The initial weld line 131 can also be regarded as being in a stress state in which stresses having various amplitudes are randomly generated. In order to evaluate a fatigue life of the initial weld line 131 in such a stress state, a linear cumulative damage rule is used.

In the linear cumulative damage rule, first, a state in which stresses having various amplitudes are randomly generated is considered as stresses having different amplitudes such as $\sigma_1$, $\sigma_2$, $\sigma_3$,..., and $\sigma_m$ being independently repeated. Next, it is assumed that stress amplitudes $\sigma_1$, $\sigma_2$, $\sigma_3$,..., and $\sigma_m$ are independently generated. The numbers $N_1$, $N_2$, $N_3$,..., and $N_m$ of times of repetitions to fracture (fatigue fracture) (numbers of cycles to fracture) in stress amplitudes are read from an S-N diagram as illustrated in FIG. 8. Damage degrees at the time when these stress amplitudes are repeated the numbers $n_1$, $n_2$, $n_3$,..., and $n_m$ of times are considered as $n_1/N_1$, $n_2/N_2$, $n_3/N_3$,..., and $n_m/N_m$.

In the linear cumulative damage rule, as indicated in Expression (1), a linear cumulative damage dm is determined. The linear cumulative damage dm is the sum of damage degrees in individual stress amplitudes. Then, when the linear cumulative damage dm $\geq 1$ holds, fatigue fracture occurs. In a variable loading condition in which irregularly repeated variable amplitude loads are received, the stress amplitudes $\sigma_1$, $\sigma_2$, $\sigma_3$,..., and $\sigma_m$ and the numbers $n_1$, $n_2$, $n_3$,..., and $n_m$ of times of repetitions may be determined by using a rainflow counting method.

$$dm = \sum_{i=1}^{m} \frac{n_i}{N_i} = \frac{n_1}{N_1} + \frac{n_2}{N_2} + \frac{n_3}{N_3} + \cdot\cdot\cdot + \frac{n_m}{N_m} \qquad \cdot\cdot\cdot(1)$$

A specific procedure for calculating a target linear cumulative damage of the initial weld line 131 under a variable loading condition with the target fatigue life setting unit 18 is as follows.

First, stresses acting on the initial weld line 131 determined by performing stress analyses for loading conditions of vibration patterns under the variable loading condition are set as different stress amplitudes $\sigma_1$, $\sigma_2$, $\sigma_3$,..., and $\sigma_m$ generated in the initial weld line 131 under the variable loading condition.

Next, the target fatigue life setting unit 18 determines, from the S-N diagram (FIG. 8), the numbers $N_1$, $N_2$, $N_3$,..., and $N_m$ of times of repetitions to fracture (numbers of cycles to fracture) of the initial weld line 131 at the time when the stress amplitudes are independently generated in the initial weld line 131.

Subsequently, the numbers $N_1$, $N_2$, $N_3$,..., and $N_m$ of times of repetitions to fracture (numbers of cycles to fracture) in the stress amplitudes and the cycle numbers $n_1$, $n_2$, $n_3$,..., and $n_m$ of loading conditions of the vibration patterns in one sequence of the variable loading condition are substituted into Expression (1) to calculate the linear cumulative damage dm in one sequence. Moreover, a linear cumulative damage DM at the time when one sequence of the variable loading condition is continuously repeated K times (K sequences) is calculated from Expression (2). Then, the numbers K of times of sequences at the time when the linear cumulative damage DM is one or more are calculated as a fatigue life of the initial weld line 131 under the variable loading condition.

$$DM = \sum_{j=1}^{K} \sum_{i=1}^{m} \frac{n_i}{N_i} = \sum_{j=1}^{K} \left( \frac{n_1}{N_1} + \frac{n_2}{N_2} + \frac{n_3}{N_3} + \cdots + \frac{n_m}{N_m} \right) \qquad \cdot\cdot\cdot(2)$$

The target fatigue life setting unit 18 sets the target fatigue life of the weld line optimization analysis model 151 based on fatigue lives of initial weld lines 131 calculated as described above. The target fatigue life is to be satisfied by a candidate 155 (to be described later) for weld line, which is left by optimization analysis. In the first embodiment, the target fatigue life is at least equal to or longer than the shortest fatigue life (minimum fatigue life) of the initial weld lines 131 calculated by the target fatigue life setting unit 18.

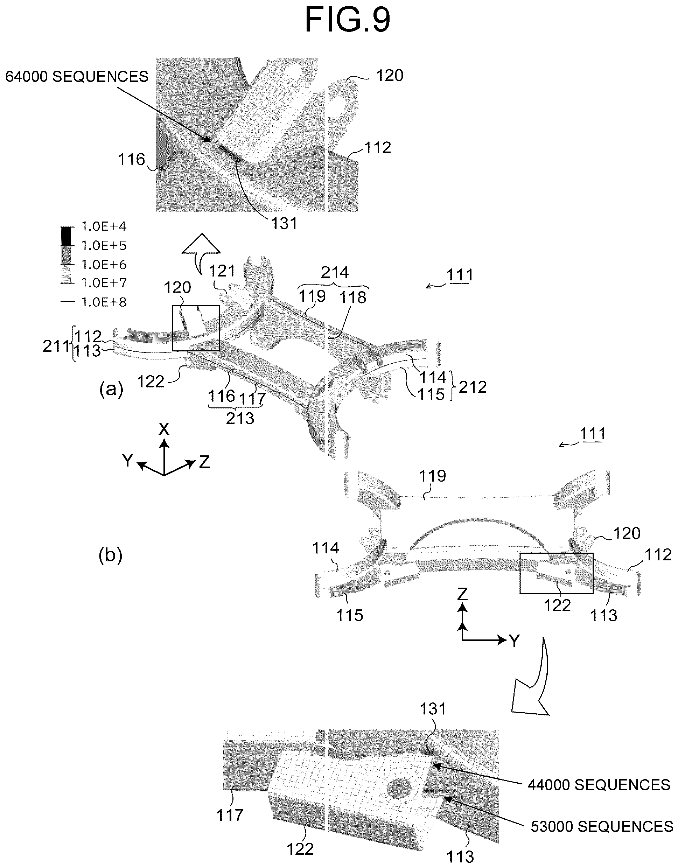

FIG. 9 illustrates one example of results of the positions of the three shortest initial weld lines 131 and fatigue lives thereof among fatigue lives of initial weld lines 131 determined by using a result of stress analysis in which the variable loading condition in FIG. 7 and the constraint condition in FIG. 5 are given to the rear subframe model 111.

The fatigue lives of the initial weld lines 131 in FIG. 9 are calculated under the variable loading condition. In the variable loading condition, the mount bushings a to d attached to an automotive body are completely restrained, and the tire input point 100 on the right side of the automotive body is set as the load input point A in the rear subframe model 111. In the variable loading condition, one cycle of the first vibration pattern and five cycles of the second vibration patterns are combined to form one sequence. In the first vibration pattern, a variable amplitude load of ±2.5 kN is input to the front-rear direction (input 1). In the second vibration pattern, a variable amplitude load of ±6.0 kN is input to the inward/outward direction (input 2).

As illustrated in FIG. 9, the fatigue lives determined for the initial weld lines 131 of the rear subframe model 111 are 44000 and 53000 sequences at joints between the subframe lower 113 and the bracket 122, and are 64000 sequences at a joint between the subframe upper 112 and the bracket 120. These joints are weld lines having the three shortest fatigue lives. From this result, the target fatigue life setting unit 18 sets a fatigue life of 44000 sequences or more of the initial weld line 131 for bonding and joining the subframe lower 113 with the bracket 122 as a target fatigue life.

As described above, commercially available fatigue life predicting analysis software can be used for calculating a fatigue life with the target fatigue life setting unit 18. For example, when a fatigue life of the initial weld line 131 modeled by a two-dimensional element is calculated by using commercially available fatigue life predicting analysis software, the fatigue life of the initial weld line 131 can be calculated by inputting conditions regarding stress of the initial weld line 131 and the like to the fatigue life predicting analysis software. A stress value of a two-dimensional element of each part model to which a two-dimensional element of the initial weld line 131 is coupled or nominal structure stress determined by force and the moment acting on both ends of the two-dimensional element of the initial weld line 131 can be used as the stress of the initial weld line 131.

Furthermore, the S-N diagram may change depending on a loading state of a load, for example, whether average stress having the same stress amplitude is compressive stress or tensile stress. Values of the fatigue life predicting analysis software and experimental values can be referred to. Alternatively, when the fatigue life is calculated by using nominal structure stress, one S-N diagram including different loading states may be used. Moreover, as illustrated in FIG.

8, the S-N diagram may be represented by applying various rules such as Miner's rule and modified Miner's rule. In Miner's rule, fracture is not determined below a fatigue limit on a low stress side. In modified Miner's rule, damage is counted below the fatigue limit.

Although, in the above description, a target fatigue life is set based on a fatigue life determined for the initial weld line 131, the target fatigue life may be set based on a fatigue life determined for the candidate 155 for weld line of the weld line optimization analysis model 151.

(Weld Line Stiffness Sensitivity Analysis Unit)

The weld line stiffness sensitivity analysis unit 19 sets an objective related to the stiffness performance of the weld line optimization analysis model 151, a constraint related to the volume of the candidate 155 for weld line, which constitutes the weld line optimization analysis model 151, and a variable loading condition to be given to the weld line optimization analysis model 151. The weld line stiffness sensitivity analysis unit 19 performs sensitivity analysis of the candidate 155 for weld line, which satisfies the objective under the variable loading condition and the constraint. The weld line stiffness sensitivity analysis unit 19 selects the candidate 155 for weld line, which has a high sensitivity for the stiffness performance, as a stiffness high-sensitivity weld line based on the sensitivity of the candidate 155 for weld line. High sensitivity means high contribution to stiffness performance.

In the first embodiment, examples of the objective related to the stiffness performance set by the weld line stiffness sensitivity analysis unit 19 include minimization of the sum of strain energy, minimization of displacement, minimization of maximum principal stress, and maximization of stiffness in the weld line optimization analysis model 151. Furthermore, examples of the constraint set by the weld line stiffness sensitivity analysis unit 19 include a volume constraint ratio for specifying the volume ratio of the candidate 155 for weld line. Furthermore, the weld line stiffness sensitivity analysis unit 19 sets, for example, the variable loading conditions (input 1 and input 2) and the constraint condition in FIGS. 5(a) and 5(b) as the variable loading condition to be given to the weld line optimization analysis model 151. Moreover, the weld line stiffness sensitivity analysis unit 19 calculates a density (mesh density) for each element (mesh model of two-dimensional element) of the candidate 155 for weld line, which is calculated by topology optimization, by using densimetry in the topology optimization. The mesh density is a virtual density representing a material filling state in an element, and has a value from zero to one. That is, a mesh density of one represents a state in which the element is completely willed with the material. A mesh density of zero represents a completely hollow state in which the element is not filled with the material. A mesh density of an intermediate value from zero to one represents an intermediate state in which the element is neither filled with the material nor hollow. Then, in the mesh density calculated by the topology optimization, an element having a large contribution to stiffness performance has a value close to one, which indicates high sensitivity for the stiffness performance. In contrast, an element having a small contribution to stiffness performance has a value of mesh sensitivity close to zero, which indicates small sensitivity for the stiffness performance. As described above, a mesh density calculated by the topology optimization serves as an index for representing the sensitivity of each element for the stiffness performance. In one example of the sensitivity analysis of the candidate 155 for weld line, which is calculated by the weld line stiffness sensitivity analysis unit 19, the sum of strain energy in the weld line optimization analysis model 151 is minimized as an objective related to stiffness performance. The volume constraint ratio of the candidate 155 for weld line is set at 50% as a constraint. The variable loading conditions (input 1 and input 2) and the constraint condition in FIGS. 5(a) and 5(b) are set as the variable loading condition to be given to the weld line optimization analysis model 151. The density of the candidate 155 for weld line, which is calculated by the topology optimization, is calculated as a sensitivity by using the densimetry in the topology optimization. Then, the candidate 155 for weld line, which has a high sensitivity for the stiffness performance, for example, the candidate 155 for weld line of a sensitivity of 0.8 to 1.0 is selected as a stiffness high-sensitivity weld line based on the sensitivity of the candidate 155 for weld line. The candidate 155 for weld line is modeled by a two-dimensional element (shell element). A weld line model and a part model are bonded and joined by node sharing.

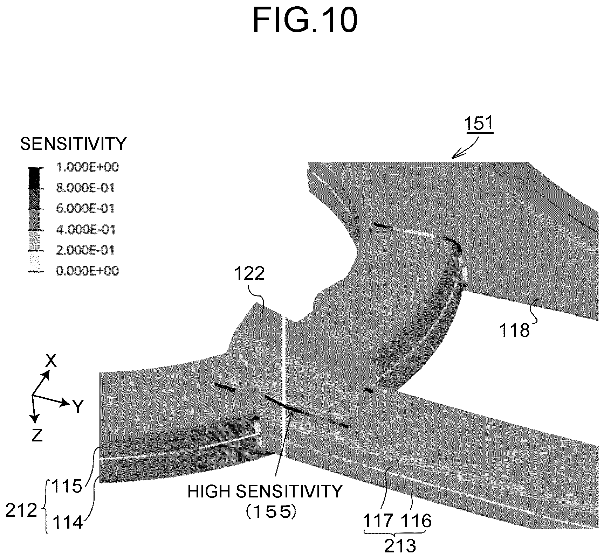

FIG. 10 illustrates one example of results of sensitivity analyses of all the candidates 155 for weld line, which constitute the weld line optimization analysis model 151. A candidate 155 for weld line, which has a high sensitivity of 0.8 or more for stiffness performance, is provided at a joint between the subframe lower 113 and the bracket 122. The candidate 155 for weld line at the joint between the subframe lower 113 and the bracket 122 is selected as a stiffness high-sensitivity weld line.

(Weld Line/Part Shape Optimization Analysis Model Generation Unit)

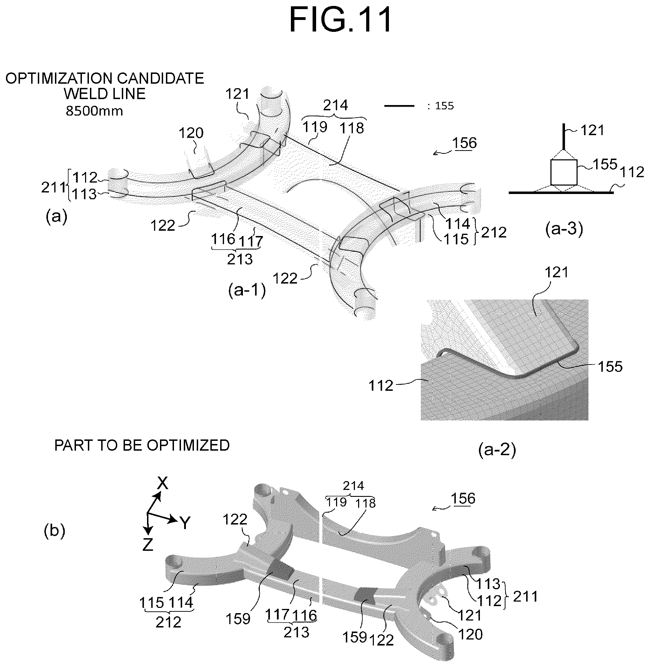

The weld line/part shape optimization analysis model generation unit 20 selects a part model bonded and joined by the stiffness high-sensitivity weld line and a weld line having a short fatigue life calculated by the target fatigue life setting unit 18 as an extension target part model. In the first embodiment, the fatigue life determined for the initial weld line 131 of the rear subframe model 111 in FIG. 9 is 44000 sequences at the joint between the subframe lower 113 and the bracket 122, and the initial weld line 131 has the shortest fatigue life. Furthermore, as described above, the weld line stiffness sensitivity analysis unit 19 selects the candidate 155 for weld line at the joint between the subframe lower 113 and the bracket 122 as a stiffness high-sensitivity weld line (FIG. 10). Therefore, the weld line/part shape optimization analysis model generation unit 20 selects the bracket 122 as an extension target part model. As described above, a part model having a high contribution to the stiffness performance and bonded and joined by a weld line having a short fatigue life is selected as an extension target part model. Moreover, the weld line/part shape optimization analysis model generation unit 20 generates a weld line/part shape optimization analysis model 156 in which a part extension portion 159 and all the candidates 155 for weld line of the weld line optimization analysis model 151 are set as design space. The part extension portion 159 is a three-dimensional element coupled to the periphery of the bracket 122, which is an extension target part model. Specifically, as illustrated in FIGS. 11(a-1) and 11(a-2), the candidate 155 for weld line includes a three-dimensional element. As illustrated in FIG. 11(a-3), the three-dimensional element constituting the candidate 155 for weld line is bonded and joined by two-dimensional elements constituting the subframe upper 112 and the bracket 121 and a beam element (broken line in figure). Furthermore, as illustrated in FIG. 11 (b), the part extension portion 159 is provided by a three-dimensional element at an end of the bracket 122, which is an extension target part model, and the three-dimensional element is coupled to the end of the bracket 122 by the beam element (not illustrated). Then, the weld line/part shape optimization analysis model 156, in which the candidate 155 for weld line and the part extension portion 159 are set as design space, is generated. The reason why the candidate 155 for weld line is set by a three-dimensional element is that the candidate 155 for weld line is to be optimized simultaneously with the part extension portion 159 which is a three-dimensional element.

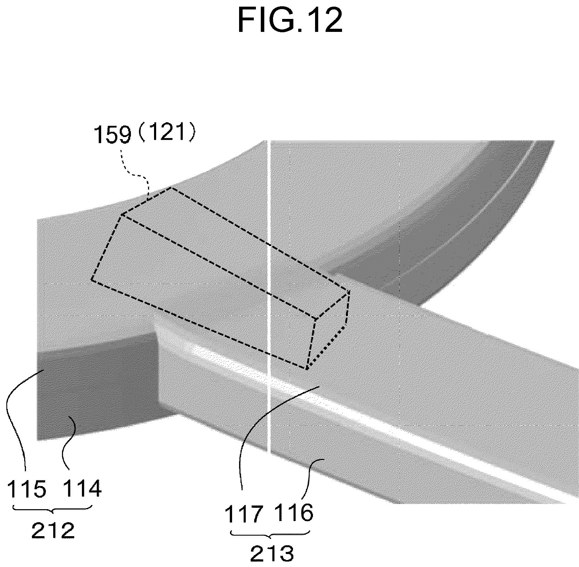

Although the above-described part extension portion 159 is added to an end of the existing premise bracket 122, a portion corresponding to the entire bracket including an existing portion may be set as the part extension portion 159 instead of the existing bracket 122 as illustrated by broken lines in FIG. 12.

(Optimization Analysis Condition Setting Unit)

In order to perform optimization analysis in which the weld line/part shape optimization analysis model 156 is to be optimized, the optimization analysis condition setting unit 21 determines the numbers of cycles to fracture near candidates 155 for weld line for each of loading conditions of vibration patterns, which are set by the variable loading condition setting unit 17. The optimization analysis condition setting unit 21 determines the sum of ratios of the cycle numbers of loading conditions of the vibration patterns and the numbers of cycles to fracture by the number of times of sequences of the variable loading condition set by the target fatigue life setting unit 18 as linear cumulative damages DM of the candidates 155 for weld line. The optimization analysis condition setting unit 21 sets a condition related to the linear cumulative damage of a candidate 155 for weld line, which is to be left by optimization analysis, a condition related to the stiffness of the weld line/part shape optimization analysis model 156, and a condition related to the length of the candidate 155 for weld line, which is to be left by optimization analysis, as objectives or constraints, which are optimization analysis conditions. The optimization analysis condition setting unit 21 further sets a constraint related to the volume ratio of the part extension portion 159.

The optimization analysis condition includes two types of an objective and a constraint. Only one objective is set depending on a purpose of the optimization analysis. Examples of the objective include a condition related to stiffness, a condition related to a fatigue life, and a condition related to a joining length.

In the condition related to stiffness, for example, a predetermined position in an analysis object model can be set as a stiffness evaluation point, and displacement or strain at the stiffness evaluation point can be set as an index. Then, in the variable loading condition, for example, minimization of a value obtained by adding displacements at a stiffness evaluation point A under the loading conditions of the vibration patterns or minimization of displacements at the stiffness evaluation point A under the loading conditions of the vibration patterns can be set as the condition related to stiffness. In the condition related to a fatigue life, a condition that the fatigue life is larger than a target fatigue life set by the target fatigue life setting unit 18 can be set. Furthermore, in the joining length, for example, a ratio to the entire joining length and the like can be set.

The constraint is imposed when optimization analysis is performed. A plurality of constraints is set, as necessary.

In the first embodiment, a condition that the fatigue life of the candidate 155 for weld line is larger than a target fatigue life set by the target fatigue life setting unit 18 can be set as a constraint. The number of cycles to fracture of the candidate 155 for weld line can be calculated by using the S-N diagram in FIG. 8 similarly to the above-described number of cycles to fracture of the initial weld line 131 under the variable loading condition.

The condition related to a fatigue life is not limited to the target fatigue life set by the target fatigue life setting unit 18, which is given as a constraint as it is. A constraint may be given in which the linear cumulative damage DM by the number of times of sequences set as a target fatigue life by the target fatigue life setting unit 18 of the candidate 155 for weld line under the variable loading condition is set as the linear cumulative damage DM < 1 in which no fatigue fracture occurs.

Similarly to the above-described linear cumulative damage DM of the initial weld line 131, the linear cumulative damage DM of the candidate 155 for weld line can be calculated by using the S-N diagram in FIG. 8 and Expression (2) using, for example, stress of a two-dimensional element of a part model to which the two-dimensional element modeled as the candidate 155 for weld line is coupled and nominal structure stress calculated from force and the moment acting on both ends of the two-dimensional element.

Moreover, in the condition related to the length of the candidate 155 for weld line, the length of the candidate 155 for weld line, which is to be left, can be set to a predetermined value. In the first embodiment, a constraint that the candidate 155 for weld line, which is to be left, has a length equal to or less than that of the initial weld line 131 is set. Moreover, a constraint that individual candidates 155 for weld line are 30 mm long or more is set in order to prevent the individual candidates 155 for weld line from becoming finely divided weld lines.

In the optimization analysis condition related to the line length of the candidate 155 for weld line, when the densimetry in the topology optimization is applied in optimization analysis performed by the optimization analysis unit 23, the volume of the candidate 155 for weld line, which is calculated based on the density of an element (e.g., two-dimensional element and three-dimensional element) modeled as the candidate 155 for weld line, may be given as a constraint. Furthermore, in the constraint related to the volume ratio of the part extension portion 159, the volume ratio of the part extension portion 159 to be left can be set to a predetermined value. In the first embodiment, a constraint that the part extension portion 159 to be left has a volume ratio of 50% or less is set.

(Optimization Analysis Unit)

The optimization analysis unit 23 gives a variable loading condition set by the variable loading condition setting unit 17 to the optimization analysis model. The optimization analysis unit 23 performs optimization analysis under the optimization analysis condition. The optimization analysis unit 23 determines the arrangement of candidates 155 for weld line for achieving one of reduction in linear cumulative damage of the candidate 155 for weld line, improvement in the stiffness of the optimization analysis model, and minimization of the length of the candidate 155 for weld line to be left as optimal arrangement of a weld line. The optimization analysis unit 23 determines an optimal shape of the extension target part model (bracket 122) including a portion to the part extension portion 159 based on the remaining shape of the part extension portion 159.

The topology optimization can be applied as optimization analysis performed by the optimization analysis unit 23. When the densimetry is used in the topology optimization, a virtual normalized density having a value from zero to one is given to an element (e.g., two-dimensional element and three-dimensional element) modeled as the candidate 155 for weld line as a design variable, and a value of a density satisfying the optimization analysis condition is calculated.

Then, a value of the calculated density of one indicates a state in which the candidate 155 for weld line is completely provided. A value of the calculated density of zero indicates a state in which no candidate 155 for weld line is provided. An intermediate value thereof indicates an intermediate state of bonding and joining of a parts assembly by using the candidate 155 for weld line.

Therefore, when there are many intermediate densities in which the densimetry is applied in the topology optimization, discretization is preferably performed by using a penalty coefficient as indicated in Expression (3).

$$K_M(\rho) = \rho^{P} K \quad \cdot \cdot \cdot \cdot \cdot \cdot (3)$$

WHERE,

   $K_M$: STIFFNESS MATRIX OBTAINED BY IMPOSING PENALTY ON STIFFNESS MATRIX OF ELEMENT
   K: STIFFNESS MATRIX OF ELEMENT
   $\rho$: NORMALIZED DENSITY
   p: PENALTY COEFFICIENT

Although the penalty coefficient of two or more is often used in the discretization, the penalty coefficient is preferably four or more in the optimization analysis of a joining position according to the present invention.

The optimization analysis unit 23 may perform optimization analysis by the topology optimization as described above, or may perform optimization analysis by another calculation method.

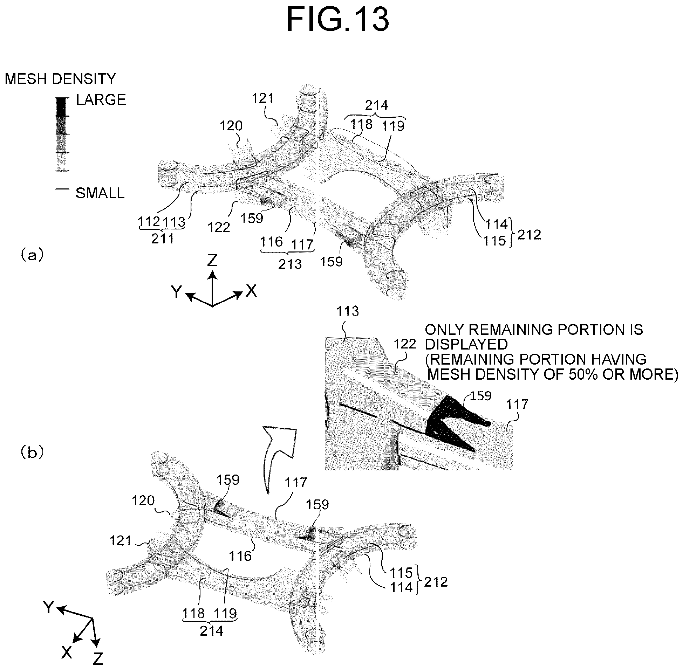

FIG. 13 illustrates density distributions of the candidate 155 for weld line and the part extension portion 159, which have been determined by the optimization analysis unit 23 performing optimization analysis by applying the densimetry in the topology optimization. FIG. 13(b) is a partially enlarged view, in which only a portion left as having a large density is displayed, of the part shape after the optimization analysis. The shape of the bracket 122 including a portion corresponding to the part extension portion 159 can be determined based on the remaining shape of the three-dimensional element, which is a result of the optimization analysis.

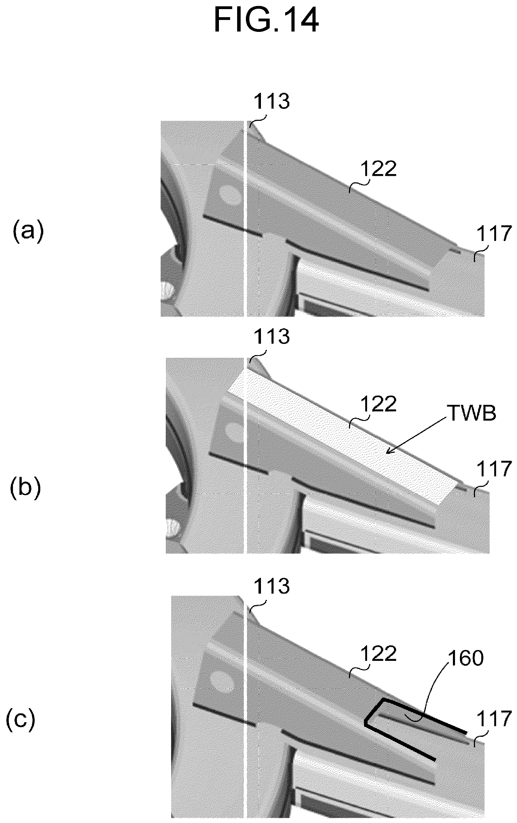

FIG. 14 illustrates an example of the shape of the bracket 122, which has been determined as described above. In FIG. 14(a), an end of the original shape is enlarged and extended by the length corresponding to that of a remaining shape portion including an upper surface portion. In FIG. 14(b), in consideration of the fact that there is no remaining shape (small density) on the upper surface of the remaining shape portion, the weight of a part is reduced on the assumption that a portion corresponding to the upper surface portion in FIG. 14(a) is thinned by using a tailor welded blank (TWB) material. In FIG. 14(c), an end of the original shape is enlarged and extended by the length corresponding to that of the remaining shape portion, and a cutout portion 160 is formed in a portion having a low mesh density. Effects of the optimal arrangement of a weld line determined in the first embodiment will be described in an example to be described later.

<Method for Optimizing and Analyzing Joining Position of Automotive Body>

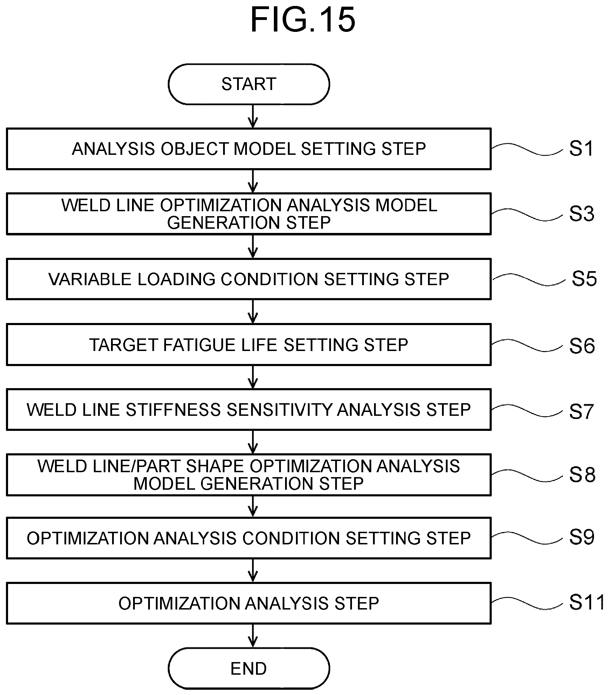

In a method for optimizing and analyzing a joining position of an automotive body (hereinafter, simply referred to as "optimization analysis method") according to the first embodiment of the present invention, optimization analysis is performed. In the optimization analysis, a computer executes the following steps for all or a part of an automotive body model having a plurality of part models including beam elements, two-dimensional elements, and/or three-dimensional elements and having the initial weld line 131 for bonding and joining the plurality of part models as a parts assembly. Optimal arrangement of a weld line for achieving one of improvement of stiffness of the automotive body model, improvement of a fatigue life near a weld line for bonding and joining the parts assembly in the automotive body model, and minimization of the length of the weld line is determined. The optimal shape of the part model bonded and joined by a weld line having a short fatigue life is determined. As illustrated in FIG. 15, the optimization analysis method includes an analysis object model setting step S1, a weld line optimization analysis model generation step S3, a variable loading condition setting step S5, a target fatigue life setting step S6, a weld line stiffness sensitivity analysis step S7, a weld line/part shape optimization analysis model generation step S8, an optimization analysis condition setting step S9, and an optimization analysis step S11. These steps will be described below. The optimization analysis device 1 (FIG. 1) including a computer performs the following steps.

<<Analysis Object Model Setting Step>>

In the analysis object model setting step S1, all or a part of an automotive body model is set as an analysis object model.

In the first embodiment, in the analysis object model setting step S1, the analysis object model setting unit 13 sets the rear subframe model 111, which is a part of the automotive body model, as an analysis object model.

<<Weld Line Optimization Analysis Model Generation Step>>

In the weld line optimization analysis model generation step S3, all the candidates 155 for weld line, which are candidates for weld line in optimal arrangement, are set for the analysis object model, and a weld line optimization analysis model is generated.

In the first embodiment, in the weld line optimization analysis model generation step S3, the weld line optimization analysis model generation unit 15 generates an additional weld line 153 between initial weld lines 131 preset in the rear subframe model 111, and sets both the initial weld lines 131 and the additional weld line 153 as candidates 155 for weld line.

<<Variable Loading Condition Setting Step>>

In the variable loading condition setting step S5, a variable loading condition is set in which a variable amplitude load to be given to the weld line optimization analysis model 151 is divided into loading conditions of a plurality of different vibration patterns and a predetermined cycle number of loading conditions of the vibration patterns are combined to form one sequence.

In the first embodiment, in the variable loading condition setting step S5, the variable loading condition setting unit 17 of the optimization analysis device 1 sets a variable loading condition in which one cycle of a loading condition of the first vibration pattern in FIG. 5(a) is combined with five cycles of loading conditions of the second vibration pattern in FIG. 5(b) to form one sequence (see FIG. 7), and sets a constraint condition for constraining the constraint points a to d as illustrated in FIG. 5.

<<Target Fatigue Life Setting Step>>

In the target fatigue life setting step S6, a target fatigue life of the weld line optimization analysis model 151 is set by the number of times of sequences of the variable loading condition set in the variable loading condition setting step S5. In relation to the target fatigue life of the weld line optimization analysis model 151, the number of times of sequences of the variable loading condition, which is the target fatigue life, may be set by separately performing stress analysis by giving a loading condition of a vibration pattern under the variable loading condition set in the variable loading condition setting step S5 to the analysis object model, calculating the number of times of sequences of the variable loading condition, which is a fatigue life under the variable loading condition of the initial weld line 131 or the candidate 155 for weld line of the analysis object model, and referring to the calculated number of times of sequences of the variable loading condition, which is a fatigue life of the initial weld line 131 or the candidate 155 for weld line. The predetermined number of times of sequences of the variable loading condition may be set as a target fatigue life from a conventional empirical rule.

The target fatigue life is a fatigue life to be satisfied by the candidate 155 for weld line to be optimized. At least the number of times of sequences of the number of times of sequences or more of the variable loading condition, which is the shortest fatigue life (minimum fatigue life) of the initial weld lines 131 calculated in the target fatigue life setting step S6, is set as a target fatigue life.

<<Weld Line Stiffness Sensitivity Analysis Step>>

In the weld line stiffness sensitivity analysis step S7, an objective related to the stiffness performance of the weld line optimization analysis model 151, a constraint related to the volume of the candidate 155 for weld line, which constitutes the weld line optimization analysis model 151, and a variable loading condition to be given to the weld line optimization analysis model 151 are set. Sensitivity analysis of the candidate 155 for weld line, which satisfies the objective under the variable loading condition and the constraint is performed. The candidate 155 for weld line, which has a high sensitivity for the stiffness performance, is selected as a stiffness high-sensitivity weld line based on the sensitivity of the candidate 155 for weld line.

<<Weld Line/Part Shape Optimization Analysis Model Generation Step>>

In the weld line/part shape optimization analysis model generation step S8, a part model bonded and joined by the stiffness high-sensitivity weld line and a weld line having a short fatigue life calculated in the target fatigue life setting step is selected as an extension target part model. The weld line/part shape optimization analysis model 156 in which the part extension portion 159 and all the candidates 155 for weld line of the weld line optimization analysis model 151 are set as design space is generated. The part extension portion 159 is a three-dimensional element coupled to the periphery of the bracket 122, which is an extension target part model.

<<Optimization Analysis Condition Setting Step>>

In the optimization analysis condition setting step S9, in order to perform optimization analysis in which the weld line/part shape optimization analysis model 156 is to be optimized, the numbers of cycles to fracture of the candidates 155 for weld line are determined for each of loading conditions of a plurality of different vibration patterns in the variable loading condition setting step S5. The sum of ratios of the cycle numbers of loading conditions of the vibration patterns and the numbers of cycles to fracture by the number of times of sequences of the variable loading condition set in the target fatigue life setting step S6 is determined as linear cumulative damages DM of the candidates 155 for weld line. A condition related to the linear cumulative damage of a candidate 155 for weld line, which is to be left by optimization analysis, a condition related to the stiffness of the weld line optimization analysis model 151, and a condition related to the length of the candidate 155 for weld line, which is to be left by optimization analysis, are set as objectives or constraints, which are optimization analysis conditions. A constraint related to the volume ratio of the part extension portion 159 is further set.

In the first embodiment, in the optimization analysis condition setting step S9, the optimization analysis condition setting unit 21 sets maximization of the stiffness of the weld line/part shape optimization analysis model 156 (minimization of displacement of stiffness evaluation point A) as an objective. The optimization analysis condition setting unit 21 sets, as optimization analysis conditions, a constraint that a fatigue life of the candidate 155 for weld line is larger than the target fatigue life, a constraint that a candidate 155 for weld line, which is to be left, has a length equal to or less than the length of the initial weld line 131 and individual candidates 155 for weld line have a length of 30 mm or more, and a constraint that the part extension portion 159 to be left has a volume ratio of 50% or less.

In the condition related to stiffness, for example, a predetermined position in an analysis object model can be set as a stiffness evaluation point, and displacement or strain at the stiffness evaluation point can be used as an index. Then, in the variable loading condition, for example, minimization of a value obtained by dividing a variable amplitude load into vibration patterns and adding displacements at the stiffness evaluation point A under the loading conditions of the vibration patterns or minimization of displacements at the stiffness evaluation point A under the variable loading condition can be set as the condition related to stiffness.

Furthermore, the condition related to a fatigue life is not limited to the target fatigue life set in the target fatigue life setting step S6, which is given as a constraint as it is. For example, a constraint that the linear cumulative damage DM of the candidate 155 for weld line is equal to or less than a linear cumulative damage corresponding to the target fatigue life may be given.

<<Optimization Analysis Step>>

In the optimization analysis step S11, a variable loading condition set in the variable loading condition setting step S5 is given to the weld line/part shape optimization analysis model 156. Optimization analysis is performed under the optimization analysis condition. The arrangement of candidate 155 for weld line for achieving one of reduction in linear cumulative damage of the candidate 155 for weld line, improvement in the stiffness of the weld line/part shape optimization analysis model 156, and minimization of the length of the candidate 155 for weld line to be left is determined as optimal arrangement of a weld line. An optimal shape of the extension target part model (bracket 122) including a portion to the part extension portion 159 is determined based on the remaining shape of the part extension portion 159.

In the first embodiment, in the optimization analysis step S11, the optimization analysis unit 23 performs optimization analysis by setting the candidates 155 for weld line and the part extension portion 159 set in the rear subframe model 111 as optimization targets, and determines the arrangement of the candidate 155 for weld line, which satisfies the optimization analysis condition, as the optimal arrangement of a weld line 157. Moreover, the shape of the bracket 122 including the portion corresponding to the part extension portion 159 is determined (FIGS. 14(a) to 14(c)).

<Program for Optimizing and Analyzing Joining Position of Automotive Body>

The first embodiment of the present invention can be configured as a program for optimizing and analyzing a joining position of an automotive body, which causes each unit of the optimization analysis device 1, including a computer, for optimizing and analyzing a joining position of an automotive body to function. That is, a program for optimizing and analyzing a joining position of an automotive body according to the first embodiment of the present invention is used to perform optimization analysis in which all or a part of the automotive body model is set as an analysis object model, optimal arrangement of a weld line for achieving one of improvement of stiffness of the automotive body model, improvement of a fatigue life near a weld line for bonding and joining a parts assembly in the automotive body model, and minimization of the length of the weld line for the analysis object model is determined, and the optimal shape of the part model bonded and joined by a weld line having a short fatigue life is determined. The program for optimizing and analyzing a joining position of an automotive body according to the first embodiment of the present invention causes a computer to function as the analysis object model setting unit 13, the weld line optimization analysis model generation unit 15, the variable loading condition setting unit 17, the target fatigue life setting unit 18, the weld line stiffness sensitivity analysis unit 19, the weld line/part shape optimization analysis model generation unit 20, the optimization analysis condition setting unit 21, and the optimization analysis unit 23 as illustrated in FIG. 1 in one example.

As described above, according to the method, the device, and the program for optimizing and analyzing a joining position of an automotive body according to the first embodiment, optimization analysis for the candidate 155 for weld line is performed by setting all or a part of an automotive body model as an analysis object model, generating the weld line optimization analysis model 151 in which a candidate 155 for weld line, which is bonded and joined to the analysis object model as a parts assembly, and setting an optimization analysis condition (objective or constraint) related to the length of a line to be left of the candidate 155 for weld line to be optimized, a fatigue life, and the stiffness of the weld line/part shape optimization analysis model 156. When a variable amplitude load in which an amplitude, a direction, and the like temporally vary is input to the automotive body, the optimal arrangement of a weld line for achieving one of minimization of the length of the candidate 155 for weld line, improvement of the stiffness of an analysis object model, and improvement of a fatigue life of a weld line for bonding and joining the parts assembly and optimization of a part shape can thus be simultaneously achieved. As described above, both (weld line and part shape) mutually having an influence can be efficiently optimized by simultaneously setting the weld line and the part shape as targets to be optimized. This enables a fatigue life equal to or longer than that in a case where the weld line is optimally arranged.

In the above description, the automotive body model obtained by modeling the entire automotive body is acquired, and the rear subframe model 111, which is a part of the automotive body model, is set as an analysis object model. In the present invention, however, the entire automotive body model may be set as an analysis object model, or a portion other than the rear subframe model 111 in the automotive body model may be set as an analysis object model. Furthermore, an automotive body portion model, which is a part of the automotive body model, may be acquired to set the acquired automotive body portion model as an analysis object model.

Furthermore, although a case where the initial weld line 131 of 6540 mm is preset in the rear subframe model 111 has been described above, the length of the initial weld line 131 is not limited thereto.

Moreover, the initial weld line 131 is preset in the rear subframe model 111 by an operator or another means. In the present invention, however, the operator may newly set an initial weld line 131, or an initial weld line 131 may be further added and set to an analysis object model in which an initial weld line 131 has been already set with the analysis object model setting unit or in the analysis object model setting step.

Although, in the first embodiment, the loading condition and the constraint condition in FIG. 5 are set to the rear subframe model 111, a variable loading condition and a constraint condition can be appropriately set in the present invention on the assumption of a variable amplitude load acting on a portion of an automotive body to be analyzed or an actual automotive body.

Furthermore, in an example of the first embodiment, target performance of the fatigue life of the candidate 155 for weld line is set based on the shortest fatigue life (minimum fatigue life) of the initial weld line 131 set in the analysis object model.

In the present invention, however, fatigue lives of the candidates 155 for weld line in the weld line optimization analysis model 151 in which the additional weld line 153 is set (see FIG. 6) in the initial weld line 131 before optimization analysis is performed can be calculated. The minimum fatigue life of the calculated fatigue lives of the candidates 155 for weld line can be determined. The target fatigue life in the optimization analysis can be set so as to satisfy the following relation.

(Minimum fatigue life of initial weld line) ≤ (Target fatigue life of candidate for weld line) ≤ (Minimum fatigue life of candidate for weld line in which weld line before optimization analysis is set)

Moreover, although, in the above description, optimization analysis is performed by setting both the initial weld line 131 and the additional weld line 153 as candidates 155 for weld line, the optimal arrangement of a weld line to be added to the initial weld line 131 may be determined by setting only the additional weld line 153 as a candidate 155 for weld line without setting the initial weld line 131 as an optimization analysis target.

Moreover, if optimization analysis is performed with the initial weld line 131 being set to be included in the candidate 155 for weld line, the candidate 155 for weld line bonded and joined as a parts assembly in the optimization analysis disappears, and the parts assembly is disassembled, which may prevent execution of the optimization analysis. In such a case, at least one fixed weld line that is not subjected to the optimization analysis can be provided in each parts assembly.

For example, the fixed weld line may be optionally selected from the initial weld lines 131. The fixed weld line may be selected by setting a candidate for fixed weld line, separately performing stress analysis or optimization analysis of the analysis object model, and referring to the result thereof.

Furthermore, although, in the above description, the fatigue life of the candidate 155 for weld line or the stiffness of the weld line optimization analysis model 151 is set as an objective, the line length of the candidate 155 for weld line may be set as an objective, and the fatigue life and the stiffness may be set as a constraint.

[Second Embodiment]

In the above-described method for optimizing and analyzing a joining position of an automotive body according to the first embodiment, optimization analysis is performed in which the optimal arrangement of a weld line for achieving one of improvement of stiffness of an automotive body model having the initial weld line 131 for bonding and joining a plurality of part models as a parts assembly, improvement of a fatigue life of a weld line for bonding and joining the parts assembly in the automotive body model, and minimization of the length of the weld line is determined. The present invention, however, can be configured as an automotive body manufacturing method for manufacturing an automotive body, in which a weld line for bonding and joining a parts assembly in the automotive body is optimally arranged and the stiffness of the automotive body and the fatigue life of the weld line is improved.

In the method for manufacturing an automotive body according to the second embodiment, the optimal arrangement of a weld line is determined for all or a part of an automotive body model having an initial weld line for bonding and joining a plurality of part models as a parts assembly by using the above-described method for optimizing and analyzing a joining position of an automotive body according to the first embodiment. Moreover, in the method for manufacturing an automotive body according to the second embodiment, the optimal shape of an extension target part model bonded and joined by a weld line having a high contribution to the stiffness performance and a short fatigue life is determined. Next, the shape of a corresponding automotive body part is changed based on the optimal shape of the extension target part model. Moreover, a joining position of a parts assembly in the automotive body is determined based on the determined optimal arrangement of a weld line of the automotive body model. Then, the parts assembly of the automotive body is bonded and joined at the determined joining position. The following can be exemplified as an aspect in which the shape of the corresponding automotive body part is changed based on the optimal shape of the extension target part model.

When densimetry of topology optimization is used in optimization analysis, the optimal shape of the extension target part model is obtained by coupling the remaining shape (mesh density distribution of predetermined threshold or more) of a part extension portion, which is a result of the optimization analysis, with the extension target part model. In a specific example of the aspect in which the shape of the automotive body part is changed, three-dimensional position data of the remaining shape of the part extension portion is input to a CAD/CAM program, and subjected to processing on CAD such as smoothing processing and shape optimization processing in accordance with constraints at the time of manufacturing an actual automotive body part. CAD data of the automotive body part corresponding to the extension target part model is changed. CAD data of a press forming die is created based on the changed CAD data of the automotive body part. The press forming die is created based on the created CAD data of the press forming die. Then, the automotive body part having an external shape capable of improving a fatigue life of a weld line in press forming is manufactured by using the created press forming die.

The press forming die is made of cast metal or steel material. In a case of a press die made of cast metal, full mold casting (lost foam casting) is used in which a casting die model is manufactured by NC processing using an NC machine tool from a material that disappears at a high temperature such as expanded polystyrene. Furthermore, in a case of a press die made of steel material, the steel material needs to be subjected to machine processing (cutting, grinding, and polishing) by the NC processing. The CAD data of the press forming die created based on the changed CAD data of automotive body part is input to a CAD/CAM program in cooperation with the NC machine tool, and converted into NC data (NC program) for NC processing. The NC machine tool is used to perform machine processing on a casting die model made of expanded polystyrene or a die made of steel material. Then, the casting die model made of expanded polystyrene or the die made of steel material is manufactured by the NC machine tool using the acquired NC data (NC program), and an actual press forming die is created.

The following can be exemplified as an aspect in which a joining position of a parts assembly in the automotive body is determined. In a specific example of the aspect in which a joining position is determined, position data of three-dimensional coordinates in the optimal arrangement of a weld line of the automotive body model acquired by using the method for optimizing and analyzing a joining position of the automotive body is input to the CAD/CAM program in cooperation with an NC unit of a welding robot arranged in an automotive body welding process, and converted into the NC data (NC program) for the welding robot. Furthermore, in a specific example of an aspect in which a parts assembly in an automotive body is bonded and joined, the parts assembly of the automotive body is bonded and joined at the determined joining position by operating the welding robot arranged in the automotive body welding process using the NC data obtained by the conversion. As described above, according to the method for manufacturing an automotive body according to the third embodiment, the optimal arrangement of a welding position of an automotive body structure in electric arc welding and the like, improvement of a fatigue life near a weld line, and improvement of the stiffness of an automotive body can be achieved, which enables reduction in welding costs and high stiffness and weight reduction of the automotive body.

[Example]

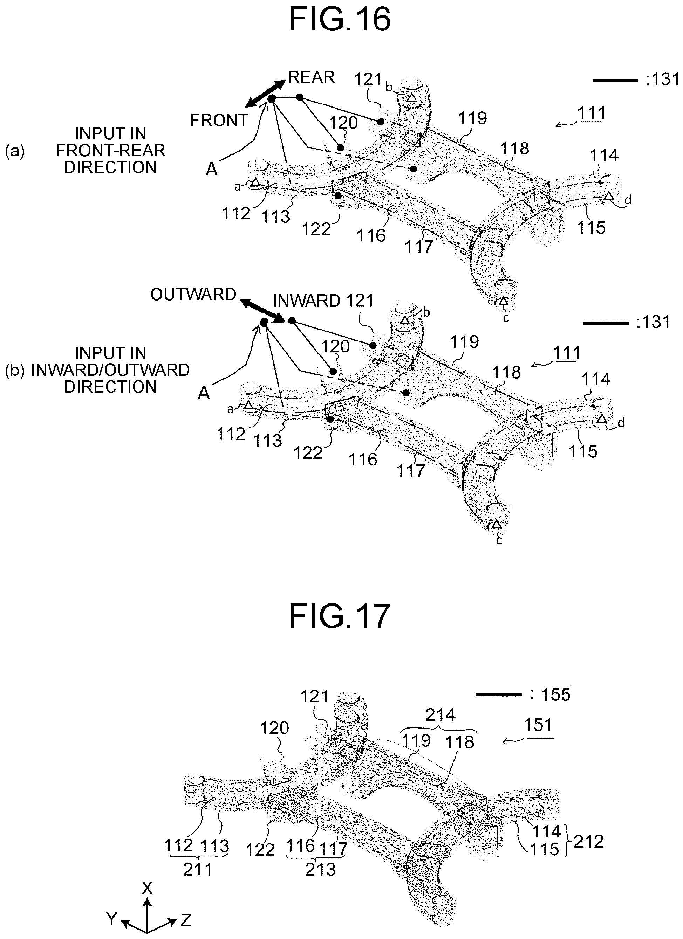

Analysis for confirming effects of the present invention was performed. The analysis will be described. In the analysis, as illustrated in FIG. 16, the rear subframe model 111 modeled by a rear subframe was set as a target. The optimal arrangement of a weld line for bonding and joining part models constituting the rear subframe model 111 as a parts assembly was determined by optimization analysis.

In the rear subframe model 111, as described in the first embodiment, the subframe upper 112 and the subframe lower 113 are bonded and joined by electric arc welding to form the side frame R211 as a part model. The subframe upper 114 and the subframe lower 115 are bonded and joined by electric arc welding to form the side frame L212. The cross member upper 116 and the cross member lower 117 are bonded and joined by electric arc welding to form the cross member front 213. The cross member front 118 and the cross member rear 119 are bonded and joined by electric arc welding to form the rear cross member 214. The side frame R211, the side frame L212, the cross member front 213, and the rear cross member 214 are further bonded and joined by electric arc welding to form a parallel cross structure. Each of these part models is modeled by a two-dimensional element.

Moreover, in the rear subframe model 111, the initial weld line 131 for bonding and joining part models as a parts assembly is preset. The initial weld line 131 is modeled by a two-dimensional element for coupling nodes of two-dimensional elements of the part model. The initial weld line 131 had a length of 6540 mm.

[Invention Example]

In an invention example, first, a target fatigue life was set based on a fatigue life of the initial weld line 131 under the variable loading condition in FIG. 7.

The variable loading condition in FIG. 7 includes the loading condition (see FIG. 5(a)) of the first vibration pattern in which a variable amplitude load of ±2.5 kN is input in the front-rear direction (input 1) and a condition (see FIG. 5(b)) of the second vibration pattern in which a variable amplitude load of ±6 kN is input in the inward/outward direction (input 2). Then, the variable loading condition of one sequence is obtained by combining one cycle of a loading condition of the first vibration pattern with five cycles of loading conditions of the second vibration pattern.

Next, stress analysis of the rear subframe model 111 was performed for each of the loading condition (FIG. 5(a)) of the first vibration pattern and the loading condition (FIG. 5(b)) of the second vibration pattern. Stress generated in the initial weld line 131 under the loading condition of each vibration pattern was determined.

Subsequently, the numbers $N_1$ and $N_2$ of times of repetitions to fracture of the initial weld line 131 at the time when different stress amplitudes $\sigma_1$ and $\sigma_2$ generated in the initial weld line 131 under the variable loading condition were independently generated in the initial weld line 131 was determined from the S-N diagram (FIG. 8).

Then, the numbers $N_1$ and $N_2$ of times of repetitions to fracture at the stress amplitudes and the cycle numbers $n_1$ (= one cycle) and $n_2$ (= 20 cycles) of the loading condition of the first vibration pattern and the loading condition of the second vibration pattern under the variable loading condition of one sequence were substituted into Expression (1) to determine the linear cumulative damage dm in one sequence.

Moreover, the number K of times of sequences in a case where the linear cumulative damage DM calculated by using Expression (2) was one or more was calculated as a fatigue life of the initial weld line 131 under the variable loading condition. A target fatigue life was set based on the shortest fatigue life of fatigue lives of the initial weld lines 131.

Next, as illustrated in FIG. 6, the weld line optimization analysis model 151 was generated in which the additional weld line 153 was set between the initial weld lines 131 in the rear subframe model 111 and the initial weld lines 131 and the additional weld line 153 were set as candidates 155 for weld line.

Then, an objective related to stiffness performance is set for the weld line optimization analysis model 151. Sensitivity analyses of the candidates 155 for weld line, which constitute the weld line optimization analysis model 151, are performed under the variable loading condition. A candidate 155 for weld line, which has a high sensitivity for the stiffness performance, is selected as a stiffness high-sensitivity weld line based on the sensitivity of the candidate 155 for weld line.

Specifically, as illustrated in the above-described first embodiment, the sum of strain energy in a part model constituting the weld line optimization analysis model 151 is minimized. The volume constraint ratio of the candidate 155 for weld line is set to 50% as a constraint. The variable loading conditions (input 1 and input 2) and the constraint condition in FIGS. 5(a) and 5(b) are set as variable loading conditions to be given to the weld line optimization analysis model 151. Sensitivity analysis in which the density of the candidate 155 for weld line calculated by topology optimization is set as sensitivity is performed by using densimetry in the topology optimization. As a result of sensitivity analysis, a weld line having a high sensitivity of 0.8 or more for stiffness performance was found at a joint between the subframe lower 113 and the bracket 122. The weld line was selected as the stiffness high-sensitivity weld line.

Furthermore, the weld line of the bracket 122 bonded and joined by the stiffness high-sensitivity weld line was as well as the weld line having a short fatigue life calculated in the target fatigue life setting step, so that the bracket 122 was selected as an extension target part model. Then, the part extension portion 159, which was a three-dimensional element, was coupled to the periphery of the bracket 122, which was an extension target part model. The weld line/part shape optimization analysis model 156 was generated in which the part extension portion 159 and the candidate 155 for weld line, which included a three-dimensional element, were set as design space. In the invention example, the weld line/part shape optimization analysis model 156 was set as a target to be optimized.

[Comparative Example]

In a comparative example, a part shape was not set as a target to be optimized. The above-described weld line optimization analysis model 151 was set as a target to be optimized.

Next, in both the invention example and the comparative example, the loading conditions and the constraint condition in FIG. 5 were given to perform optimization analysis. The candidate 155 for weld line, which satisfied the optimization analysis condition was determined. In the optimization analysis, topology optimization based on densimetry was applied. A penalty coefficient of four was set in the topology optimization to perform discretization.

Table 1 illustrates combinations of an objective and constraint functions under the optimization analysis condition.

Table 1

| | | Optimization analysis condition | | | |
| --- | --- | --- | --- | --- | --- |
| | Objective | Constraints | | | |
| | | (I) Stiffness | (II) Fatigue life | (III) Joining length | (IV) Part shape |
| Invention example | (I) Stiffness | - | ○ | ○ | ○ |
| Comparative example | (I) Stiffness | - | ○ | ○ | Nothing |

In the objective related to stiffness, displacement of the stiffness evaluation point A (see FIG. 14) under each of the loading condition of the first vibration pattern and the loading condition of the second vibration pattern was equal to or less than displacement at the stiffness evaluation point A at the time when stress analysis was performed for the rear subframe model 111 in which the initial weld line 131 was set.

Furthermore, similarly to the above-described initial weld line 131, the linear cumulative damage DM of the candidate 155 for weld line under the variable loading condition was calculated under the constraint related to a fatigue life. Then, a fatigue life calculated from the linear cumulative damage DM of each candidate 155 for weld line was larger than the target fatigue life. Moreover, a candidate 155 for weld line, which was to be left by the optimization analysis, had a length equal to or less than the length of the initial weld line 131 in the objective and the constraints related to the length of the candidate 155 for weld line, that is, a joining length. A stiffness low-sensitively part had a volume ratio of 50% or less under the constraint of the part shape in the invention example.

A result of a result of the candidate 155 for weld line, which had been left, and the part shape in the invention example was as illustrated in FIG. 13 in the above-described first embodiment. Furthermore, FIG. 17 illustrates a result of the candidate 155 for weld line, which had been left, in the comparative example.

In the invention example, as illustrated in FIG. 13, the part extension portion 159 set in the bracket 122 had a remaining shape at wall portions on both sides. The candidates 155 for weld line were more sparsely arranged than the initial weld lines 131.

Furthermore, although there was no major difference in comparison with the comparative example, weld lines (see portion surrounded by broken line in FIGS. 13 and 17) for bonding and joining the cross member front 118 and the cross member lower 117 were more sparsely arranged in the invention example than in the comparative example.

Next, in order to evaluate performance in the invention example and the comparative example, stiffness and a fatigue life of a weld line were calculated. In the invention example, the candidates 155 for weld line, which had been left by optimization analysis, were set as the weld lines 157 in the optimal arrangement (see FIG. 13). A portion corresponding to the part extension portion was set as a part shape in FIGS. 14(a) to 14(c). An optimal rear subframe model in which weld lines were arranged also in the portion was set as a target. In the comparative example, an analysis model in which the candidate 155 for weld line, which had been left by the optimization analysis, was set was set as a target. In an aspect in FIG. 14(b) in which the upper surface of the bracket 122 was thinned assuming TWB, two patterns of sheet thicknesses of (2.6T/1.0T) and (2.0T/1.0T) were set.

In the calculation of stiffness and a fatigue life, stress analysis was performed by giving the loading condition of the first vibration pattern and the loading condition and the constraint condition of the second vibration pattern in FIG. 5 to an optimal weld line rear subframe model 161. Displacements at the stiffness evaluation point A (see FIG. 5) determined by stress analysis under the loading condition of the first vibration pattern and the loading condition of the second vibration pattern were set as indices of the stiffness.

The minimum fatigue life among fatigue lives calculated by using stresses of weld lines determined by stress analyses of the optimal weld line rear subframe model 161 was set as an index of the fatigue life.

Table 2 illustrates an evaluation result. In Invention Example 1 in Table 2, the bracket 122 had a shape indicated in FIG. 14(a). In Invention Example 2 (Case 1), the bracket 122 had a shape in FIG. 14(b) and a sheet thickness of (2.6T/1.0T). In Invention Example 2 (Case 2), the bracket 122 had a shape in FIG. 14(b) and a sheet thickness of (2.0T/1.0T). In Invention Example 3, the bracket 122 had a shape indicated in FIG. 14(c). Table 2 also illustrates a weld length (length of weld line) and part weight.

Table 2

| | | After optimization | | Performance evaluation result | | |
| --- | --- | --- | --- | --- | --- | --- |
| | | Weld length [mm] | Part weight [kg] | Fatigue life *1 [set] | Improvement rates of stiffness *2[%] | |
| | | | | | Input 1 | Input 2 |
| Original part | | 6540 | 16.2 | 44000 | Reference | Reference |
| <Example 1> | Invention Example 1 | 6300 | 16.6 | 520000 | 11.2 | 7.3 |
| | Invention Example 2 Case 1 | 6300 | 16.5 | 510000 | 11.0 | 7.2 |
| | Invention Example 2 Case 2 | 6300 | 16.3 | 490000 | 10.5 | 6.9 |
| | Invention Example 3 | 6300 | 16.3 | 490000 | 10.4 | 6.8 |
| | Comparative Example 1 | 6340 | 16.2 | 230000 | 9.8 | 6.3 |

The improvement rates of stiffness in inputs 1 and 2 were determined by the following expression.

$$\text{IMPROVEMENT RATE OF STIFFNESS OF INPUT 1 [\%]} = \left[1 - \frac{\text{ABSOLUTE VALUE OF DISPLACEMENT IN REAR (X) DIRECTION AT POINT A IN JOINING ARRANGEMENT AFTER OPTIMIZATION IN INPUT 1 (FRONT-REAR DIRECTION)}}{\text{ABSOLUTE VALUE OF DISPLACEMENT IN REAR (X) DIRECTION AT POINT A IN INITIAL WELD LINE ARRANGEMENT IN INPUT 1 (FRONT-REAR DIRECTION)}}\right] \times 100$$

$$\text{IMPROVEMENT RATE OF STIFFNESS OF INPUT 2 [\%]} = \left[1 - \frac{\text{ABSOLUTE VALUE OF DISPLACEMENT IN OUTWARD (Y) DIRECTION AT POINT A IN JOINING ARRANGEMENT AFTER OPTIMIZATION IN INPUT 2 (INWARD/OUTWARD DIRECTION)}}{\text{ABSOLUTE VALUE OF DISPLACEMENT IN OUTWARD (X) DIRECTION AT POINT A IN INITIAL WELD LINE ARRANGEMENT IN INPUT 2 (INWARD/OUTWARD DIRECTION)}}\right] \times 100$$

In any of Invention Example 1, Invention Example 2 (case 1 and case 2), and Invention Example 3, a weld length was reduced, and performance (fatigue life and stiffness) could be improved compared to those of an original part and the comparative example. In particular, it could be demonstrated that a fatigue life was more than ten times of the original part, and could be significantly improved to two times or more of that in the comparative

example.

Industrial Applicability

According to the present invention, there can be provided a method, a device, and a program for optimizing and analyzing a joining position of an automotive body, and a method for manufacturing the automotive body. The method, the device, and the program simultaneously achieve the optimal arrangement of a weld line for minimizing the length of the weld line and optimization of a part shape while improving the stiffness of an automotive body and a fatigue life of a continuous weld line for bonding and joining a parts assembly in the automotive body in a case where a simple or variable load is input to the automotive body.

Reference Signs List

| 1 | OPTIMIZATION ANALYSIS DEVICE |
| 3 | DISPLAY DEVICE |
| 5 | INPUT DEVICE |
| 7 | MEMORY STORAGE |
| 9 | WORKING DATA MEMORY |
| 11 | ARITHMETIC PROCESSING UNIT |
| 13 | ANALYSIS OBJECT MODEL SETTING UNIT |
| 15 | WELD LINE OPTIMIZATION ANALYSIS MODEL GENERATION UNIT |
| 17 | VARIABLE LOADING CONDITION SETTING UNIT |
| 18 | TARGET FATIGUE LIFE SETTING UNIT |
| 19 | WELD LINE STIFFNESS SENSITIVITY ANALYSIS UNIT |
| 20 | WELD LINE/PART SHAPE OPTIMIZATION ANALYSIS MODEL GENERATION UNIT |
| 21 | OPTIMIZATION ANALYSIS CONDITION SETTING UNIT |
| 23 | OPTIMIZATION ANALYSIS UNIT |
| 31 | OPTIMIZATION ANALYSIS DEVICE |
| 33 | ARITHMETIC PROCESSING UNIT |
| 34 | OPTIMIZATION ANALYSIS UNIT |
| 100 | TIRE INPUT POINT |
| 101 | AUTOMOTIVE BODY MODEL FILE |
| 111 | REAR SUBFRAME MODEL |
| 112 | SUBFRAME UPPER |
| 113 | SUBFRAME LOWER |
| 114 | SUBFRAME UPPER |
| 115 | SUBFRAME LOWER |
| 116 | CROSS MEMBER UPPER |

| 117 | CROSS MEMBER LOWER |
| 118 | CROSS MEMBER FRONT |
| 119 | CROSS MEMBER REAR |
| 120, 121, 122 | BRACKET |
| 131 | INITIAL WELD LINE |
| 141 | ELECTRIC ARC WELDING PORTION |
| 151 | WELD LINE OPTIMIZATION ANALYSIS MODEL |
| 153 | ADDITIONAL WELD LINE |
| 155 | CANDIDATE FOR WELD LINE |
| 156 | WELD LINE/PART SHAPE OPTIMIZATION ANALYSIS MODEL |
| 157 | WELD LINE |
| 159 | PART EXTENSION PORTION |
| 160 | CUTOUT PORTION |
| 211 | SIDE FRAME R |
| 212 | SIDE FRAME L |
| 213 | CROSS MEMBER FRONT |
| 214 | REAR CROSS MEMBER |

**Claims**

1. A method for manufacturing an automotive body, in which a weld line (157) for bonding and joining a parts assembly in the automotive body is optimally arranged and stiffness of the automotive body and a fatigue life of the weld line (157) are improved, the method comprising:

determining an optimal shape of an extension target part model and optimal arrangement of the weld line (157) by using a method for optimizing and analyzing a joining position of an automotive body;
changing a shape of a corresponding automotive body part based on the optimal shape of the extension target part model;
determining a joining position of the parts assembly in the automotive body based on the optimal arrangement of the weld line (157), which has been determined; and
bonding and joining the parts assembly of the automotive body at the joining position that has been determined, the method for optimizing and analyzing a joining position of an automotive body comprising:

optimization analysis is performed in which a computer executes each of following steps, in which optimal arrangement of the weld line (157) for achieving one of improvement of stiffness of an automotive body model, improvement of a fatigue life near the weld line (157) for bonding and joining a parts assembly in the automotive body model, and minimization of a length of the weld line (157) is determined, and an optimal shape of the part model bonded and joined by the weld line (157) having a short fatigue life is determined, for all or a part of the automotive body model having a plurality of part models including a beam element, a two-dimensional element, and/or a three-dimensional element and having an initial weld line (131) for bonding and joining the plurality of part models as a parts assembly;
an analysis object model setting step of setting all or the part of the automotive body model as an analysis object model;
a weld line optimization analysis model generation step of generating a weld line optimization analysis model (151) in which all candidates (155) for weld line in the optimal arrangement are set to the analysis object model;
a variable loading condition setting step of setting a variable loading condition in which a variable amplitude load to be given to the weld line optimization analysis model (151) is divided into loading conditions of a plurality of different vibration patterns and a predetermined cycle number of loading conditions of the vibration patterns are combined to form one sequence;
a target fatigue life setting step of

performing stress analysis by giving the variable loading condition to the analysis object model or the weld line optimization analysis model (151),
calculating the fatigue life of the weld line (157) in the analysis object model or the weld line optimization analysis model (151), and
setting a target fatigue life by a number of times of sequences of the variable loading condition based on a calculation result;

a weld line stiffness sensitivity analysis step of

setting an objective related to stiffness performance of the weld line optimization analysis model (151), a constraint related to volumes of the all candidates (155) for weld line, and

the variable loading condition to be given to the weld line optimization analysis model (151),

performing sensitivity analysis for the all candidates (155) for weld lines, which constitute the weld line optimization analysis model (151) satisfying the objective, under the variable loading condition and the constraint, and

selecting a candidate (155) for a weld line from the candidates having high sensitivity to stiffness performance as a stiffness high-sensitivity weld line based on sensitivities of the all candidates (155) for weld line;

a weld line/part shape optimization analysis model generation step of

selecting, as an extension target part model, a part model bonded and joined by the stiffness high-sensitivity weld line and a weld line having a short fatigue life calculated in the target fatigue life setting step, and

generating a weld line/part shape optimization analysis model (156) in which a part extension portion, which is a three-dimensional element coupled to a periphery of the extension target part model, and all candidates (155) for weld line of the weld line optimization analysis model (151) are set as design space;

an optimization analysis condition setting step of

determining a number of cycles to fracture near the all candidates (155) for weld line for each of the loading conditions of the vibration patterns in order to perform optimization analysis in which the weld line/part shape optimization analysis model (156) is set as a target to be optimized,

determining a sum of ratios of the cycle number of the loading conditions of the vibration patterns and the number of cycles to fracture by a number of times of sequences of the variable loading condition set in the target fatigue life setting step as linear cumulative damage of each of the candidates (155) for weld line,

setting a condition related to linear cumulative damage of the selected candidate (155) for weld line to be left by optimization analysis, a condition related to stiffness of the weld line/part shape optimization analysis model (156), and a condition related to a length of the candidate (155) for weld line to be left by optimization analysis as objectives or constraints, which are optimization analysis conditions, and setting a constraint related to a volume ratio of the part extension portion; and an optimization analysis step of

giving the variable loading condition set in the variable loading condition setting step to the weld line/part shape optimization analysis model (156),

performing optimization analysis under the optimization analysis condition,

determining, as optimal arrangement of the weld line (157), arrangement of the candidate (155) for weld line for achieving one of a reduction in linear cumulative damage of the candidate (155) for weld line, improvement of stiffness of the optimization analysis model, and minimization of a length of the candidate (155) for weld line, which is to be left, and

determining an optimal shape of the extension target part model including a portion corresponding to the part extension portion based on a remaining shape of the part extension portion.

2. The manufacturing method according to claim 1, wherein

the optimization analysis step performs topology optimization by densimetry, and
a penalty coefficient is set to four or more and discretization is performed in the topology optimization.

**Patentansprüche**

1. Verfahren zum Herstellen einer Fahrzeugkarosserie, bei dem eine Schweißnaht (157) zum Verbinden und Fügen einer Baugruppe in der Fahrzeugkarosserie optimal angeordnet wird und die Steifigkeit der Fahrzeugkarosserie sowie die Ermüdungslebensdauer der Schweißnaht (157) verbessert werden, wobei das Verfahren umfasst:

Bestimmen einer optimalen Form eines Erweiterungszielteilmodells und einer optimalen Anordnung der Schweißnaht (157) durch das Verwenden eines Verfahrens zum Optimieren und Analysieren einer Verbindungsposition einer Fahrzeugkarosserie;

Ändern einer Form eines entsprechenden Fahrzeugkarosserieteils auf der Grundlage der optimalen Form des Erweiterungszielteilmodells;

Bestimmen einer Verbindungsposition der Teileanordnung in der Fahrzeugkarosserie auf der Grundlage der optimalen Anordnung der Schweißnaht (157), die bestimmt wurde und

Verbinden und Vereinigen der Teileanordnung der Fahrzeugkarosserie an der Verbindungsposition, die bestimmt wurde,

wobei das Verfahren zum Optimieren und Analysieren einer Verbindungsposition einer Fahrzeugkarosserie umfasst:

es wird eine Optimierungsanalyse durchgeführt, bei welcher ein Computer jeden der folgenden Schritte ausführt, wobei die optimale Anordnung der Schweißnaht (157) zur Erzielung eines von einer Verbesserung der Steifigkeit eines Fahrzeugkarosseriemodells, einer Verbesserung der Ermüdungslebensdauer in der Nähe der Schweißnaht (157) zum Verbinden und Fügen einer Baugruppe in dem Fahrzeugkarosseriemodell und einer Minimierung der Länge der Schweißnaht (157) bestimmt wird; und eine optimale Form des durch die Schweißnaht (157) mit einer kurzen Ermüdungslebensdauer verbundenen und zusammengefügten Teilmodells bestimmt wird, für das gesamte oder einen Teil des Fahrzeugkarosseriemodells, das eine Vielzahl von Teilmodellen einschließlich eines Balkenelements, eines zweidimensionalen Elements und/oder eines dreidimensionalen Elements aufweist und eine anfängliche Schweißnaht (131) zum Verbinden und Zusammenfügen der Vielzahl von Teilmodellen als Teilbaugruppe aufweist:

einen Schritt zum Festlegen eines Analyseobjektmodells des Festlegens des gesamten oder eines Teils des Fahrzeugkarosseriemodells als Analyseobjektmodell;

einen Schritt zum Erzeugen eines Schweißnahtoptimierungsanalysemodells des Erzeugens eines Schweißnahtoptimierungsanalysemodell (151), in dem alle Kandidaten (155) für die Schweißnaht in der optimalen Anordnung auf das Analyseobjektmodell eingestellt sind;

einen Schritt zum Einstellen variabler Belastungsbedingungen des Einstellens variabler Belastungsbedingungen, bei denen eine variable Amplitudenbelastung, die auf das Schweißnahtoptimierungsanalysemodell (151) ausgeübt werden soll, in Belastungsbedingungen einer Vielzahl unterschiedlicher Schwingungsmuster unterteilt wird und eine vorbestimmte Schwingungszahl von Belastungsbedingungen der Schwingungsmuster kombiniert werden, um eine Sequenz zu bilden;

einen Schritt zum Einstellen einer Ziel-Ermüdungslebensdauer des

Durchführens einer Spannungsanalyse, indem die variable Belastungsbedingung auf das Analyseobjektmodell oder das Schweißnaht-Optimierungsanalysemodell (151) angewendet wird,

Berechnens der Ermüdungslebensdauer der Schweißnaht (157) im Analyseobjektmodell oder im Schweißnaht-Optimierungsanalysemodell (151) und

Festsetzens einer Ziel-Ermüdungslebensdauer durch eine Anzahl von Sequenzen der variablen Belastungsbedingung auf der Grundlage eines Berechnungsergebnisses;

einen Schritt zum Empfindlichkeitsanalyse der Schweißnahtsteifigkeit, des

Festsetzens eines Ziels in Bezug auf die Steifigkeitsleistung des Schweißnahtoptimierungsanalysemodells (151), eine Beschränkung in Bezug auf die Volumina aller Kandidaten (155) für die Schweißnaht und die variable Belastungsbedingung, die dem Schweißnahtoptimierungsanalysemodell (151) auferlegt werden soll,

Durchführens einer Sensitivitätsanalyse für alle Kandidaten (155) für Schweißnähte, die das Schweißnahtoptimierungsanalysemodell (151) bilden und dem Ziel gerecht werden, unter der variablen Belastungsbedingung und der Beschränkung, und

Auswählens eines Kandidaten (155) für eine Schweißnaht aus den Kandidaten mit hoher Empfindlichkeit gegenüber der Steifigkeitsleistung als eine Schweißnaht mit hoher Steifigkeitsempfindlichkeit auf der Grundlage der Empfindlichkeiten aller Kandidaten (155) für Schweißnähte;

einen Schritt zum Erzeugen eines Schweißnaht-/Teilform-Optimierungsanalysemodells des

Auswählens eines Teilmodells, das durch die Empfindlichkeitshochsensible Schweißnaht und eine Schweißnaht mit einer kurzen Ermüdungslebensdauer, die im Schritt zum Einstellen der Zielermüdungslebensdauer berechnet wurde, verbunden und zusammengefügt ist, als Erweiterungszielteilmodell und

Erzeugens eines Schweißnaht-/Teilform-Optimierungsanalysemodells (156), in dem ein Teilerweiterungsabschnitt, der ein dreidimensionales Element ist, welches mit einem Umfang des Zielteilerweiterungsmodells gekoppelt ist, und alle Kandidaten (155) für eine Schweißnaht des SchweißnahtOptimierungsanalysemodells (151) als Entwurfsraum festgelegt sind;

einen Optimierungsanalyse-Bedingungseinstellungsschritt des

Bestimmens einer Anzahl von Zyklen bis zum Bruch in der Nähe aller Kandidaten (155) für Schweißnähte für jede der Belastungsbedingungen der Schwingungsmuster, um eine Optimierungsanalyse durchzuführen, in welcher das Schweißnaht-/Teilform-Optimierungsanalyse-Modell (156) als zu optimierendes Ziel festgelegt wird,

Bestimmens einer Summe von Verhältnissen der Zykluszahl der Belastungsbedingungen der Schwingungsmuster und der Anzahl von Zyklen bis zum Bruch durch eine Anzahl von Sequenzen der variablen Belastungsbedingung, die im Schritt zum Festlegen der Zielermüdungslebensdauer als lineare kumulative Schädigung jedes der Kandidaten (155) für die Schweißnaht festgelegt wurde,

Festlegens einer Bedingung in Bezug auf die lineare kumulative Schädigung des ausgewählten Kandidaten (155) für die Schweißnaht, die durch die Optimierungsanalyse erhalten bleiben soll, eine Bedingung in Bezug auf die Steifigkeit des Schweißnaht-/Teilform-Optimierungsanalysemodells (156) und eine Bedingung in Bezug auf die Länge des Kandidaten (155) für die Schweißnaht, die durch die Optimierungsanalyse erhalten bleiben soll, als Ziele oder Einschränkungen, die Optimierungsanalysebedingungen sind, und

Festlegens einer Einschränkung in Bezug auf ein Volumenverhältnis des Teilerweiterungsabschnitts; und

einen Optimierungsanalyseschritt des

Weitergebens der im Schritt zum Festlegen der variablen Belastungsbedingung festgelegten variablen Belastungsbedingung an das Schweißnaht-/Teilform-Optimierungsanalysemodell (156), Durchführens der Optimierungsanalyse unter der Optimierungsanalysebedingung, Bestimmens der Anordnung des Kandidaten (155) für die Schweißnaht zum Erreichen eines von einer Verringerung der linearen kumulativen Schädigung des Kandidaten (155) für die Schweißnaht, einer Verbesserung der Steifigkeit des Optimierungsanalysemodells und einer Minimierung einer Länge des Kandidaten (155) für die Schweißnaht, die verbleiben soll, als optimale Anordnung der Schweißnaht (157), und

Bestimmens einer optimalen Form des Erweiterungszielteilmodells, das einen Abschnitt umfasst, der dem Teilerweiterungsabschnitt entspricht, basierend auf einer verbleibenden Form des Teilerweiterungsabschnitts.

2. Herstellungsverfahren gemäß Anspruch 1, wobei

der Optimierungsanalyseschritt eine Topologieoptimierung durch Densimetrie durchführt und ein Strafkoeffizient auf vier oder mehr gesetzt wird und eine Diskretisierung in der Topologieoptimierung durchgeführt wird.

**Revendications**

1. Procédé de fabrication d'une carrosserie automobile, dans lequel une ligne de soudure (157) pour la liaison et l'assemblage d'un ensemble de pièces dans la carrosserie automobile est agencée de manière optimale et la rigidité de la carrosserie automobile ainsi que la durée de vie en fatigue de la ligne de soudure (157) sont améliorées, le procédé comprenant :

la détermination d'une forme optimale d'un modèle de pièce cible d'extension et d'un agencement optimal de la ligne de soudure (157) en utilisant un procédé d'optimisation et d'analyse d'une position d'assemblage d'une carrosserie automobile ;

la modification de la forme d'une pièce de carrosserie automobile correspondante sur la base de la forme optimale du modèle de pièce cible d'extension ;

la détermination d'une position d'assemblage de l'ensemble de pièces dans la carrosserie automobile sur la base de l'agencement optimal de la ligne de soudure (157) qui a été déterminé ; et

la liaison et l'assemblage de l'ensemble de pièces de la carrosserie automobile à la position d'assemblage qui a été déterminée,

le procédé d'optimisation et d'analyse d'une position d'assemblage d'une carrosserie automobile comprenant :

une analyse d'optimisation, au cours de laquelle un ordinateur exécute chacune des étapes suivantes, où est déterminé un agencement optimal de la ligne de soudure (157) pour obtenir un effet parmi une amélioration de la rigidité d'un modèle de carrosserie automobile, une amélioration de la durée de vie en fatigue près de la ligne de soudure (157) pour la liaison et l'assemblage d'un ensemble de pièces dans le modèle de carrosserie automobile, et la minimisation de la longueur de la ligne de soudure (157), et où est déterminée une forme optimale du modèle de pièce lié et assemblé par la ligne de soudure (157) ayant une courte durée de vie en fatigue, pour tout ou partie du modèle de carrosserie automobile comportant une pluralité de modèles de pièces incluant un élément de poutre, un élément bidimensionnel et/ou un élément tridimensionnel et comportant une ligne de soudure initiale (131) pour la liaison et l'assemblage de la pluralité de modèles de pièces en un ensemble de pièces ;

une étape de définition du modèle d'objet d'analyse, consistant à définir tout ou partie du modèle de carrosserie automobile comme un modèle d'objet d'analyse ;

une étape de génération d'un modèle d'analyse d'optimisation de ligne de soudure (151), consistant à générer un modèle d'analyse pour l'optimisation des lignes de soudure, dans lequel tous les candidats (155) de ligne de soudure dans l'agencement optimal sont définis dans le modèle d'objet d'analyse ;

une étape de définition de condition de charge variable, consistant à définir une condition de charge variable où une charge d'amplitude variable à appliquer au modèle d'analyse d'optimisation de ligne de soudure (151) est divisée en conditions de charge correspondant à une pluralité de modes de vibration différents, et un nombre de cycles prédéterminé de conditions de charge des modes de vibration sont combinés pour former une séquence ;

une étape de définition de la durée de vie en fatigue cible, consistant à

effectuer une analyse de tension en donnant la condition de charge variable au modèle d'objet d'analyse ou au modèle d'analyse d'optimisation de ligne de soudure (151),

calculer la durée de vie en fatigue de la ligne de soudure (157) dans le modèle d'objet d'analyse ou dans le modèle d'analyse d'optimisation de ligne de soudure (151), et

définir une durée de vie en fatigue cible par un nombre de séquences de la condition de charge variable, sur la base d'un résultat de calcul ;

une étape d'analyse de sensibilité à la rigidité de la ligne de soudure, consistant à

définir un objectif relatif aux performances de rigidité du modèle d'analyse d'optimisation de ligne de soudure (151), à une contrainte relative aux volumes de tous les candidats (155) de ligne de soudure, et à la condition de charge variable à donner au modèle d'analyse d'optimisation de ligne de soudure (151),

effectuer une analyse de sensibilité pour tous les candidats (155) des lignes de soudure, qui constituent le modèle d'analyse d'optimisation de ligne de soudure (151) satisfaisant l'objectif, sous la condition de charge variable et la contrainte, et

sélectionner un candidat (155) pour une ligne de soudure parmi les candidats ayant une sensibilité élevée à la performance en rigidité en tant que ligne de soudure à haute sensibilité à la rigidité, sur la base des sensibilités de tous les candidats (155) de ligne de soudure ;

une étape de génération de modèle d'analyse d'optimisation de ligne de soudure / de forme de pièce, consistant à

sélectionner, comme modèle de pièce cible d'extension, un modèle de pièce lié et assemblé par la ligne de soudure à haute sensibilité à la rigidité et une ligne de soudure ayant une courte durée de vie en fatigue, calculée à l'étape de définition de la durée de vie en fatigue cible, et

générer un modèle d'analyse d'optimisation de ligne de soudure / de forme de pièce (156) où une portion d'extension de pièce, qui est un élément tridimensionnel couplé à la périphérie du modèle de pièce cible d'extension, et tous les candidats (155) de ligne de soudure du modèle d'analyse d'optimisation de ligne de soudure (151) sont définis comme un espace de conception ;

une étape de définition de condition d'analyse d'optimisation, consistant à

déterminer le nombre de cycles pour obtenir une rupture près de tous les candidats (155) de ligne de soudure pour chacune des conditions de charge des modes de vibration afin d'effectuer une analyse d'optimisation où le modèle d'analyse d'optimisation de ligne de soudure / de forme de pièce (156) est défini comme une cible à optimiser,
déterminer une somme de ratios du nombre de cycles des conditions de charge des modes de vibration et du nombre de cycles jusqu'à la rupture par un nombre de séquences de la condition de charge variable définie à l'étape de définition de la durée de vie en fatigue cible comme les dommages cumulés linéaires de chacun des candidats (155) de ligne de soudure,
définir une condition relative aux dommages cumulés linéaires du candidat sélectionné (155) de ligne de soudure à omettre par l'analyse d'optimisation, une condition relative à la rigidité du modèle d'analyse d'optimisation de ligne de soudure / de forme de pièce (156), et une condition relative à la longueur du candidat (155) de ligne de soudure à omettre par l'analyse d'optimisation en tant qu'objectifs ou contraintes, qui sont des conditions d'analyse d'optimisation, et
définir une contrainte relative à un ratio volumique de la portion d'extension de pièce ; et

une étape d'analyse d'optimisation, consistant à

donner la condition de charge variable définie à l'étape de définition de condition de charge variable au modèle d'analyse d'optimisation de ligne de soudure / de forme de pièce (156),
effectuer une analyse d'optimisation sous la condition d'analyse d'optimisation,
déterminer, comme agencement optimal de la ligne de soudure (157), l'agencement du candidat (155) de ligne de soudure afin d'obtenir un résultat qui doit être omis parmi une réduction des dommages cumulatifs linéaires du candidat (155) de ligne de soudure, une amélioration de la rigidité du modèle d'analyse d'optimisation, et une minimisation de la longueur du candidat (155) de ligne de soudure, et
déterminer une forme optimale du modèle de pièce cible d'extension incluant une portion correspondant à la portion d'extension de pièce, sur la base d'une forme restante de la portion d'extension de pièce.

2. Procédé de fabrication selon la revendication 1, dans lequel

l'étape d'analyse d'optimisation effectue une optimisation topologique par densimétrie, et
un coefficient de pénalité est défini à quatre ou plus, et une discrétisation est effectuée dans l'optimisation topologique.

# FIG.1

1

3 — DISPLAY DEVICE

5 — INPUT DEVICE

7 — MEMORY STORAGE

101 — AUTOMOTIVE BODY MODEL FILE

| ARITHMETIC PROCESSING UNIT | 11 |

ANALYSIS OBJECT MODEL SETTING UNIT — 13

WELD LINE OPTIMIZATION ANALYSIS MODEL GENERATION UNIT — 15

VARIABLE LOADING CONDITION SETTING UNIT — 17

TARGET FATIGUE LIFE SETTING UNIT — 18

WELD LINE STIFFNESS SENSITIVITY ANALYSIS UNIT — 19

WELD LINE/PART SHAPE OPTIMIZATION ANALYSIS MODEL GENERATION UNIT — 20

OPTIMIZATION ANALYSIS CONDITION SETTING UNIT — 21

OPTIMIZATION ANALYSIS UNIT — 23

WORKING DATA MEMORY — 9

# FIG.2

# FIG.3

INITIAL WELD LINE
6540mm

━━━ :131

# FIG.4

# FIG.5

(a) INPUT IN FRONT-REAR DIRECTION

(b) INPUT IN INWARD/OUTWARD DIRECTION

# FIG.6

(a) OPTIMIZATION CANDIDATE WELD LINE 8500mm

(b)

(b-1)

(b-2)

(b-3)

——— :131
----- :153

——— :155

# FIG.7

ONE SEQUENCE

ONE CYCLE          FIVE CYCLES

A: ONE CYCLE OF LOADING CONDITION OF FIRST VIBRATION PATTERN
B: FIVE CYCLES OF LOADING CONDITIONS OF SECOND VIBRATION PATTERN

# FIG.8

MINER'S RULE

FATIGUE LIMIT

MODIFIED MINER'S RULE

NUMBER N OF TIMES OF REPETITIONS TO FRACTURE
(NUMBER OF CYCLES TO FRACTURE)

# FIG.9

64000 SEQUENCES

120

112

116

131

1.0E+4
1.0E+5
1.0E+6
1.0E+7
1.0E+8

121

120

214

119 118

111

211 {112
113}

122

116 117

213

114
115 }212

(a)

X
Y    Z

111

119

114

120

112

115

122 113

(b)

Z
Y

131

44000 SEQUENCES

53000 SEQUENCES

117

122

113

# FIG.10

SENSITIVITY

1.000E+00
8.000E-01
6.000E-01
4.000E-01
2.000E-01
0.000E+00

151

122

118

X
Y
Z

115
212
114

HIGH SENSITIVITY
(155)

117 116
213

# FIG.11

OPTIMIZATION CANDIDATE
WELD LINE
8500mm

——— : 155

(a)

(a-1)

(a-2)

(a-3)

PART TO BE OPTIMIZED

(b)

# FIG.12

159 (121)

115 114
212

117 116
213

# FIG.13

MESH DENSITY

LARGE

SMALL

(a)

121
120
214
118 119

112 113
211
122 159
116 117
213 159

114
115 212

Z
Y X

113

ONLY REMAINING PORTION IS
122 DISPLAYED
(REMAINING PORTION HAVING
MESH DENSITY OF 50% OR MORE)

159 117

(b)

159 117
120
159
121
116

115
114 212

118 119
214

Y
X Z

# FIG.14

(a)

(b)

(c)

# FIG.15

START

| ANALYSIS OBJECT MODEL SETTING STEP | S1 |

| WELD LINE OPTIMIZATION ANALYSIS MODEL GENERATION STEP | S3 |

| VARIABLE LOADING CONDITION SETTING STEP | S5 |

| TARGET FATIGUE LIFE SETTING STEP | S6 |

| WELD LINE STIFFNESS SENSITIVITY ANALYSIS STEP | S7 |

| WELD LINE/PART SHAPE OPTIMIZATION ANALYSIS MODEL GENERATION STEP | S8 |

| OPTIMIZATION ANALYSIS CONDITION SETTING STEP | S9 |

| OPTIMIZATION ANALYSIS STEP | S11 |

END

# FIG.16

— :131

(a) INPUT IN FRONT-REAR DIRECTION

REAR 121 b
FRONT 120 119 111
118 114
A
a 112 113 122 116 117 115
c d

# FIG.17

— : 155

121 151
120 214
119 118
112 113 122 116 117 114 115 212
211 213

X
Y Z

**REFERENCES CITED IN THE DESCRIPTION**

**Patent documents cited in the description**

- JP 2013025593 A

- JP 2016071770 A

**Non-patent literature cited in the description**

- The layout and fatigue life analysis of welding spots for the cab body in white of a commercial vehicle. **AN CUI et al.** ELECTRONIC AND MECHANICAL ENGINEERING AND INFORMATION TECHNOLOGY (EMEIT), 2011 INTERNATIONAL CONFERENCE ON. IEEE, 12 August 2011, 2089-2093